# EUROPÄISCHE PATENTANMELDUNG

(11) **EP 2 602 109 A2**
(43) Veröffentlichungstag der Anmeldung: **12.06.2013**
(21) Anmeldenummer: 12008150.0
(22) Anmeldetag: 05.12.2012
(51) Int. Cl.: B32B 27/30, B32B 5/18, B32B 5/14, B32B 3/30, B32B 7/12, B32B 5/32, B32B 27/08, E04B 1/80

(54) **Styrolpolymerschaumstoff-Verbundkörper**

(30) Priorität: 06.12.2011 EP 11009639
(71) Anmelder: Alporit AG, 5623 Boswil (CH)
(72) Erfinder: Jenni, Daniel, 6405 Immensee (CH); Simmler, Hans, 8636 Wald (CH)
(74) Vertreter: Mai, Dörr, Besier

(57) **Zusammenfassung**

Verfahren zum Verkleben von mindestens zwei Styrolpolymerschaumstoffplatten, wobei man
(i) zwei Styrolpolymerschaumstoffplatten bereitstellt, die jeweils auf mindestens einer Oberfläche eine Schicht aufweisen, die
a. jeweils mindestens 90,0 % der Gesamtfläche der jeweiligen Oberfläche bedeckt und
b. mindestens ein Styrolpolymer umfasst,

wobei die Schichten jeweils Bereiche mit einer Rauheit Rt im Bereich von 0,05 mm bis 1,0 mm aufweisen,
(ii) eine Klebstoffzusammensetzung auf einen Bereich der ersten Styrolpolymerschaumstoffplatte aufbringt, der eine Rauheit Rt im Bereich von 0,05 mm bis 1,0 mm aufweist,
(iii) die Klebstoffzusammensetzung auf der der ersten Platte abgewandten Seite mit einem Bereich der zweiten Styrolpolymerschaumstoffplatte in Kontakt bringt, der eine Rauheit Rt im Bereich von 0,05 mm bis 1,0 mm aufweist,
(iv) die Klebstoffzusammensetzung ggf. auskühlen und aushärten lässt,
(v) die Auftragsmenge der Klebstoffzusammensetzung, bezogen auf die Klebefläche, im Bereich 40 g/m² bis 250 g/m², bevorzugt 80 g/m² bis 150 g/m², wählt.

Der nach dem Verfahren erhältliche Verbundkörper eignet sich insbesondere zum Isolieren von Gebäuden.

## Beschreibung

Die vorliegende Erfindung betrifft Styrolpolymerschaumstoff-Verbundkörper, insbesondere zum Isolieren von Gebäuden, bevorzugt zum Wärmedämmen von Gebäuden.

Aufgrund der immer knapper werdenden nicht erneuerbaren Energieträger, wie Kohle, Gas und Erdöl, und ihrer damit verbundenen Teuerung spielt die Wärmedämmung von Gebäuden eine immer größere Rolle. Hierfür werden insbesondere Kunststoffschaumplatten, bevorzugt Styrolpolymerschaumstoffplatten, eingesetzt, die zunächst mittels FCKW-haltiger Treibmittel hergestellt wurden. Diese Treibmittel sind jedoch wegen ihrer schädigenden Wirkung auf die Ozonschicht äußerst nachteilig.

Mit dem Einsatz von alternativen Treibmitteln haben sich bei der Herstellung dieser Kunststoffschaumplatten erhebliche Schwierigkeiten ergeben, die insbesondere mit größerer Plattendicke zunehmen. Weiterhin weisen die auf diese Weise erhältlichen Platten in der Regel schlechtere Wärmedämmeigenschaften auf, wobei dieser Effekt insbesondere für dicke Kunststoffschaumplatten zu beobachten ist.

Vor diesem Hintergrund schlägt das europäische Patent EP 1 213 118 B1 ein Verfahren für die Verbindung von mindestens zwei HFCKW-frei extrudierten Polystyrolschaumplatten als Ausgangsplatten zu neuen Platten mit einer Mindestdicke von 70 mm vor.

Eine Weiterentwicklung dieses Verfahrens wird im europäischen Patent EP 1 471 125 B1 beschrieben.

Beide Patente gehen zwingend davon aus, dass Sperrschichten innerhalb des verklebten Plattenverbundes, z. B. durch Extrusionshäute und/oder Kleberschichten, zu vermeiden sind und dass daher der Einsatz eines diffusionsoffenen Klebers nötig ist, ohne den Begriff der Diffusionsoffenheit genauer zu spezifizieren.

Die Vorgehensweise dieser Patente ist jedoch aus verschiedenen Gründen nachteilig.

Zum einen erfordert die vorgesehene Entfernung der Extrusionshaut einen weiteren Verfahrensschritt und verschlechtert auf diese Weise die Raum-Zeit-Ausbeute der genannten Verfahren. Weiterhin führt die Entfernung der Extrusionshaut zu einem signifikanten Materialverlust, der die Materialkosten und somit die Produktionskosten erhöht. Darüber hinaus müssen Sicherheitsvorkehrungen getroffen werden, um eine Gesundheitsbeeinträchtigung durch den bei der Entfernung der Extrusionshaut gebildeten Frässtaub zu vermeiden.

Ferner sind die Eigenschaften der auf diese Weise erhältlichen Plattenverbunde in vielerlei Hinsicht, insbesondere bezüglich ihrer Isolationseigenschaften und hinsichtlich ihrer mechanischen Eigenschaften, verbesserungswürdig.

Abgesehen davon ist auch eine Verwendung von Polyurethan-Klebern auf Isocyanatbasis zur Verklebung von Styrolpolymerschaumstoffplatten aus dem europäischen Patent EP 1 471 125 B1 bekannt. Aussagen zur Oberflächenrauheit der zu verbindenden Oberflächen sind dieser Druckschrift allerdings nicht zu entnehmen.

Darüber hinaus sind aus anderen Druckschriften halogenfreie, flammgeschützte Polymerschaumstoffe, insbesondere Polystyrol-Partikelschaumstoffe aus expandierbarem Polystyrol (EPS) oder Polystyrol-Extrusionsschaumstoffplatten (XPS) bereits bekannt und werden z. B. in der WO 2006/027241 beschrieben. Hinweise auf die Verklebung der XPS-Platten oder die Isolierung von Gebäuden sind der Druckschrift allerdings nicht zu entnehmen.

Ferner werden Heißschmelzklebstoffzusammensetzungen, enthaltend mindestens ein thermoplastisches, bei 25°C festes silangepfropftes Poly-α-olefin, bereits in den Druckschriften WO 2009/133093 und EP 2 075 297 A1 beschrieben. Sie werden in diesen Dokumenten zur Verklebung von Polyolefin-Folien verwendet. Hinweise auf die Verklebung von Styrolpolymerschaumstoffen oder die Isolierung von Gebäuden sind den Druckschriften allerdings nicht zu entnehmen.

DE 10 2010 011 966 A1 offenbart ein Verfahren zur Extrusion von Schaumplatten aus Polystyrol, bei welchem man im Extruder eine spezielle Treibmittelzusammensetzung in das schmelzflüssige Polystyrol einmischt. Die resultierenden Platten werden miteinander verbunden, indem man an der Berührungsfläche die Extrusionshaut entfernt und die Platten dann mittels eines diffusionsoffenen Klebers, wie z. B. mittels eines Reaktionsklebers und/oder eines Hot-Melt-Klebers, miteinander verklebt. Aussagen zur Oberflächenrauheit der zu verbindenden Oberflächen sind dieser Druckschrift allerdings nicht zu entnehmen.

EP 1 958 975 A1 beschreibt einen Zwei-Komponenten Klebstoff zur Verklebung von Holzwerkstoffen, umfassend eine isocyanathaltige Komponente A und eine aminhaltige Komponente B, wobei
- die Komponente A ein Isocyanat-terminiertes Präpolymer mit einer Isocyanat-Funktionalität von 1,7, vorzugsweise von 1,7 < f_{NCO} < 3, besonders bevorzugt im Bereich von 2 bis 3; und
- die Komponente B wenigstens ein Di- und/oder Polyamin, vorzugsweise ein Polyetherdiamin und/oder Polyetherpolyamin, enthält.

Hinweise auf die Verwendung dieses Klebstoffs für die Herstellung von Styrolpolymerschaumstoff-Verbundkörpern gibt es in dieser Druckschrift jedoch nicht.

Aufgabe der vorliegenden Erfindung war es daher, bessere Möglichkeiten zur Isolierung, insbesondere zur Wärmedämmung von Gebäuden, aufzuzeigen. Dabei wurden insbesondere eine Verbesserung der Langzeit-Isoliereigenschaften, insbesondere der Langzeit-Dämmeigenschaften, sowie eine Verbesserung der mechanischen Eigenschaften, insbesondere hinsichtlich der Zugfestigkeit, gewünscht. Darüber hinaus sollte die Lösung der zugrundeliegenden Aufgabe auf möglichst einfache Art und Weise realisiert werden können. Gewünscht waren in diesem Zusammenhang insbesondere eine möglichst gute Raum-Zeit-Ausbeute und eine möglichst hohe Effizienz sowie eine aus gesundheitspolitischen und umweltpolitischen Gründen möglichst unbedenkliche Vorgehensweise.

Gelöst werden diese sowie weitere Aufgaben, die sich aus den dargelegten Überlegungen zwangsläufig ergeben, durch die Bereitstellung eines Verbundkörpers, der nach einem Verfahren mit allen Merkmalen des vorliegenden Anspruchs 1 erhältlich ist. Die auf Anspruch 1 rückbezogenen Unteransprüche beschreiben besonders vorteilhafte Varianten zur Herstellung des Verbundkörpers. Die übrigen Ansprüche betreffen den erfindungsgemäßen Verbundkörpers sowie besonders zweckmäßige Anwendungsgebiete.

Durch die Bereitstellung eines Verbundkörpers, welcher nach einem Verfahren zum Verkleben von mindestens zwei Styrolpolymerschaumstoffplatten erhältlich ist, wobei man
(i) zwei Styrolpolymerschaumstoffplatten bereitstellt, die jeweils auf mindestens einer Oberfläche eine Schicht aufweisen, die
   a. jeweils mindestens 90,0 % der Gesamtfläche der jeweiligen Oberfläche bedeckt und
   b. mindestens ein Styrolpolymer umfasst,
      wobei die Schichten jeweils Bereiche mit einer Rauheit Rt im Bereich von 0,05 mm bis 1,0 mm aufweisen,
(ii) eine Klebstoffzusammensetzung auf einen Bereich der ersten Styrolpolymerschaumstoffplatte aufbringt, der eine Rauheit Rt im Bereich von 0,05 mm bis 1,0 mm aufweist,
(iii) die Klebstoffzusammensetzung auf der der ersten Platte abgewandten Seite mit einem Bereich der zweiten Styrolpolymerschaumstoffplatte in Kontakt bringt, der eine Rauheit Rt im Bereich von 0,05 mm bis 1,0 mm aufweist,
(iv) die Klebstoffzusammensetzung ggf. auskühlen und aushärten lässt,
(v) die Auftragsmenge der Klebstoffzusammensetzung, bezogen auf die Klebefläche, im Bereich 40 g/m² bis 250 g/m², bevorzugt 80 g/m² bis 150 g/m², wählt,
gelingt es auf nicht ohne Weiteres vorhersehbare Weise, die Isolierung von Gebäuden, insbesondere die Wärmedämmung von Gebäuden und dabei die Langzeit-Isoliereigenschaften, insbesondere die Langzeit-Dämmeigenschaften, zu verbessern.

Es hat sich gezeigt, dass die zusammengesetzten Styrolpolymerschaumstoffplatten der vorliegenden Erfindung eine wesentlich bessere Isolierung, insbesondere eine wesentlich bessere Wärmeisolierung, als einstückig geschäumte, dicke Styrolpolymerschaumstoffplatten erlauben. Wahlweise kann das genutzt werden, um geringere Plattendicken mit gleicher Isolierwirkung, insbesondere gleicher Wärmeisolierung, anzubieten. Die geringere Plattendicke hat noch wesentliche bauliche Vorteile.

Darüber hinaus sind die Vorteile des Verbundkörpers der vorliegenden Erfindung insbesondere bei beiderseitiger Feuchtigkeitseinwirkung auf eine mindestens dreischichtige Platte zu beobachten. Hier verlangsamen vorzugsweise zusätzliche Diffusionsbremsschichten in der Platte, zweckmäßigerweise eine nicht diffusionsoffene Klebstoffschicht und bevorzugt die Extrusionshäute der Ausgangsplatten, eine Feuchtigkeitsanreicherung im Kernbereich der Platte, die die Isoliereigenschaften des Verbundkörpers herabsetzen würde.

Zusätzlich weist der erfindungsgemäße Verbundkörper ein für die Anwendung äußerst vorteilhaftes Eigenschaftsprofil auf. Er zeichnet sich günstigerweise durch eine Kombination folgender Vorteile aus:
■ sehr hohe Festigkeit des Verbunds, auch bei Querzugbelastung,
■ sehr hohe Dauerdruckbelastbarkeit,
■ sehr geringe kapillare Wasseraufnahme,
■ sehr geringe Wasseraufnahme durch Diffusion,
■ hervorragende Frost-/Tauerwechselbelastbarkeit, bevorzugt ohne Verminderung der Zugfestigkeit des Verbundkörpers,
■ sehr gute Dauerelastizität der Klebefuge,
■ Unempfindlichkeit der Klebeverbindung gegenüber hydrolytischer Degradation,
■ konstante Wärmeleitfähigkeit aufgrund einer trockenen Kernzone.

Weiterhin können die erfindungsgemäßen Verbundkörper auf vergleichbar einfache Art und Weise hergestellt und verwendet werden. Sie erlauben insbesondere eine Herstellung mit sehr hoher Raum-Zeit-Ausbeute und einer sehr guten Effizienz.

Darüber hinaus ist das erfindungsgemäße Verfahren zur Herstellung der Verbundkörper aus gesundheitspolitischen sowie aus umweltpolitischen Gründen vergleichsweise unbedenklich. Die erfindungsgemäß einzusetzende Klebstoffzusammensetzung umfasst vorzugsweise keine Isocyanate und ist daher aufgrund von Aspekten der Arbeitshygiene und -sicherheit besonders vorteilhaft.

Ferner hat sich gezeigt, dass die erfindungsgemäß bevorzugte Klebstoffzusammensetzungen auch in dünnen Schichten eine verlängerte Offenzeit, d. h. eine Offenzeit von typischerweise mehreren, insbesondere von 3 bis 10 Minuten aufweisen, während der ein Fügen mit einem Fügepartner gut möglich ist. Der Klebstoff ist vorzugsweise in der Lage, während der Offenzeit die Oberflächen der Fügepartner gut zu benetzen. Zudem baut sich zweckmäßigerweise schnell eine Frühfestigkeit auf, welche es erlaubt, dass der gebildete Klebverbund innerhalb kurzer Zeit in der Lage ist, Kräfte zu einem gewissen Maß zu übertragen. Als dünne Schichten werden in dem vorliegenden Dokument Klebstoffschichtdicken von weniger als 1 mm, typischerweise von 0,05 bis 0,5 mm, insbesondere um 0,1 mm, verstanden. Durch Wasser-bedingte Vernetzungsreaktion lassen sich schließlich gemäß einer besonders bevorzugten Variante der vorliegenden Erfindung sehr hohe Endfestigkeiten erreichen, welche kohäsiv typischerweise 1 MPa bis 2 MPa betragen. Die Zugbelastbarkeit des Verbundkörpers ist durch die Zugfestigkeit der Styrolpolymerschaumstruktur, durch die Präparation der Oberflächen sowie durch verschiedene Parameter der Verklebung gegeben.

Bei der Verwendung von Klebstoffen mit verlängerter Offenzeit ist ein mit anderen Klebern vielfach benötigtes "Reaktivieren" (Wiederaufschmelzen) des Klebstoffs vor dem Fügen mit der Oberfläche des Fügepartners nicht mehr nötig. Dies führt zu einem stark vereinfachten Klebeprozess, was zusätzlich auch finanziellen Anreiz schafft, derartige Klebstoffe einzusetzen.

Es hat sich zudem gezeigt, dass die für die Zwecke der vorliegenden Erfindung besonders bevorzugten Heißschmelzklebstoffzusammensetzungen, die mindestens ein thermoplastisches, bei 25°C festes, silangepfropftes Poly-α-olefin (P) umfassen, sehr lagerstabil sind, gute Verarbeitungseigenschaften, insbesondere im Applikationstemperaturbereich von 100°C bis 200°C, aufweisen und bei diesen Temperaturen auch über längere Zeit viskositätsstabil sind. Die Aushärtung dieser Klebstoffe erfolgt geruchsfrei, schnell und auch bei dickschichtigen Anwendungen in der Regel ohne Blasen. Weiterhin zeichnen sich diese Klebstoffe durch gute Haftung und eine gute Beständigkeit gegenüber Umwelteinflüssen aus.

Zusätzlich haben sich erhebliche Fertigungsvorteile der erfindungsgemäßen Verbundkörper gegenüber einstückig geschäumten Styrolpolymerschaumstoffplatten ergeben, die aus einer geringeren notwendigen Lagerzeit resultieren. Je dicker die Platten sind, desto länger müssen die Platten lagern, um Schrumpf und Dehnung sowie ein Schüsseln der Platten auf ein zulässiges Maß zu verringern. Die Lagerzeit kann für dicke einstückige Styrolpolymerschaumstoffplatten 6 Monate und mehr betragen. Das erfordert eine riesige Lagerkapazität und extreme Lagerkosten.

Die notwendige Lagerzeit der erfindungsgemäßen Verbundkörper ist nur ein Bruchteil der herkömmlich erforderlichen Lagerzeit bei gleicher Dicke.

Die Herstellung der erfindungsgemäßen Verbundkörper aus Ausgangsplatten kleinerer Dicke hat überraschender Weise noch weitere Vorteile, denn es reduziert sich die Anzahl der herzustellenden Dickenformate. Z. B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung Verbindung bereits drei bzw. vier weitere handelsübliche Dickenformate. Es können auch unterschiedlich dicke Platten miteinander kombiniert werden, z. B. 50iger und 60iger Platen oder 40iger und 50iger Platten.

Im Folgenden wird die vorliegende Erfindung gelegentlich unter Bezugsnahme auf die beiliegenden Figuren 1 bis 3 erläutert. Dabei veranschaulicht Fig. 1 eine berechnete Autoregressionsstruktur zu Erzeugung einer stochastischen Oberflächenstruktur mit Rauheitsgrad Rt. Fig. 2 zeigt einen Ausschnitt der zufälligen Oberflächenstruktur einer Prägewalze. Fig. 3 stellt einen Querschnitt durch einen erfindungsgemäßen Plattenverbund dar, der eine Klebefuge sowie zwei Styrolpolymerplatten mit der vorliegend geforderten Rauheit Rt umfasst.

Die vorliegende Erfindung betrifft ein Verfahren zum Verkleben von mindestens zwei Styrolpolymerschaumstoffplatten, welche grundsätzlich keinen weiteren Beschränkungen unterliegen.

Platten bezeichnen im Sinne der vorliegenden Erfindung insbesondere flache, vorzugsweise überall gleich dicke, auf zwei gegenüberliegenden Seiten von je einer im Verhältnis zur Dicke sehr ausgedehnte ebene Flächen begrenzte Formkörper, die vorzugsweise eine Würfel- oder eine Quaderform aufweisen. Die zwei sich gegenüberliegenden Seiten sind vorzugsweise quadratisch oder rechteckig ausgebildet und weisen vorzugsweise eine Fläche größer 100 cm², insbesondere größer 1000 cm², auf. Die Dicke der Platten ist vorzugsweise kleiner 101 mm, insbesondere kleiner 81 mm.

Für die Zwecke der vorliegenden Erfindung bevorzugte Styrolpolymere umfassen sowohl Styrolhomopolymere als auch Styrolcopolymere. Hierzu gehören insbesondere glasklares Polystyrol (GPPS), Schlagzähpolystyrol (HlPS), anionisch polymerisiertes Polystyrol oder Schlagzähpolystyrol (A-IPS), Styrol-α-Methylstyrol-Copolymere, Acrylnitril-Butadien-Styrolpolymerisate (ABS), Styrol-Acrylnitril (SAN), Acrylnitril-Styrol-Acrylester (ASA), Methyacrylat-Butadien-Styrol (MBS), Methylmethacrylat-Acrylnitril-Butadien-Styrol (MABS)-Polymerisate oder Mischungen davon oder mit Polyphenylenether (PPE). Styrolhomopolymere haben sich jedoch besonders bewährt.

Für die Zwecke der vorliegenden Erfindung ganz besonders günstig ist der Einsatz von Schaumstoffplatten aus expandierbaren Styrolpolymeren (EPS) oder aus Styrolpolymerextrusionschaumstoffen (XPS), insbesondere aus Polystyrolextrusionschaumstoffen (XPS).

Die Styrolpolymerschaumstoffe weisen bevorzugt eine Dichte im Bereich von 8 g/l bis 200 g/l, besonders bevorzugt im Bereich von 10 g/l bis 50 g/l, insbesondere im Bereich von 20 g/l bis 50 g/l, auf und sind bevorzugt zu mehr als 80 %, besonders bevorzugt zu 95 bis 100%, geschlossenzellig.

Die erfindungsgemäß einzusetzenden Styrolpolymerschaumstoffplatten, insbesondere aus expandierbaren Styrolpolymeren (EPS) oder aus Styrolpolymerextrusionschaumstoffen (XPS), werden bevorzugt durch Einmischen eines Treibmittels in die Polymerschmelze und anschließende Extrusion zu Schaumstoffplatten, Schaumstoffsträngen oder expandierbaren Granulaten hergestellt, wobei in den letzteren Fällen die Schaumstoffplatten aus den Schaumstoffsträngen oder expandierbaren Granulaten in an sich bekannter Weise erhalten werden.

Bei der Herstellung der Platten können der Styrolpolymerschmelze auch Polymerrecyklate der genannten thermoplastischen Polymere, insbesondere Styrolpolymere und expandierbare Styrolpolymere (EPS), in Mengen zugemischt werden, die deren Eigenschaften nicht wesentlich verschlechtern, in der Regel in Mengen von maximal 50 Gew.-%, insbesondere in Mengen von 1 Gew.-% bis 20 Gew.-%.

Zum Verkleben der Styrolpolymerschaumstoffplatten wird im Rahmen der vorliegenden Erfindung wird mindestens eine ggf. vernetzte Klebstoffzusammensetzung eingesetzt, die zwischen zwei Styrolpolymerschaumstoffplatten angeordnet wird. Nach DIN 16920 (06/1981) wird ein Klebstoff definiert als "nichtmetallischer Werkstoff, der Fügeteile durch Flächenhaftung (Adhäsion) und innere Festigkeit (Kohäsion) verbinden kann". Hierzu gehören sowohl, physikalisch abbindende Klebstoffe, wie Schmelzklebstoffe, lösemittelhaltige Nassklebstoffe, Kontaktklebstoffe, Dispersionsklebstoffe, wasserbasierte Klebstoffe und Plastisole, sowie chemisch härtende Klebstoffe, wie Polymerisationsklebstoffe, beispielsweise Cyanacrylat-Klebstoffe (Sekundenkleber), Methylmethacrylat-Klebstoffe, anaerob härtende Klebstoffe, ungesättigte Polyester (UP-Harze) und strahlenhärtende Klebstoffe; Polykondensationsklebstoffe, beispielsweise Phenol-Formaldehydharz-Klebstoffe, Silikone, silanvernetzende Polymerklebstoffe, Polyimidklebstoffe und Polysulfidklebstoffe; sowie Polyadditionsklebstoffe, beispielsweise Epoxidharz-Klebstoffe, Polyurethan-Klebstoffe und Silikone.

Für die Zwecke der vorliegenden Erfindung haben sich Heißschmelzklebstoffe besonders bewährt. "Heißschmelzklebstoffe", auch Schmelzklebestoffe, Heißklebestoffe, Heißkleber oder Heißleime genannt, sind lösungsmittelfreie und bei Raumtemperatur (25°C) mehr oder weniger feste Produkte, die im heißen Zustand auf die Klebefläche aufgetragen werden und beim Abkühlen eine Verbindung herstellen. Diese auch als Hotmelt bekannte Gruppe von Klebstoffen basiert in der Regel auf verschiedenen chemischen Rohstoffen.

Die Adhäsion wird durch Temperaturerhöhung, also Schmelzen erreicht, welches eine Verringerung der Viskosität zur Folge hat. Durch die geringe Viskosität kann eine ausreichende Benutzung des zu verklebenden Substrats gewährleistet werden.

Die Kohäsion wird durch das Abkühlen der Schmelze erreicht.

Als Basispolymer umfasst der Heißschmelzklebstoff vorzugsweise mindestens ein Polyamid (PA), welches zweckmäßigerweise eine Applikationstemperatur größer 200°C aufweist, mindestens ein Polyethylen (PE), welches zweckmäßigerweise eine Applikationstemperatur im Bereich von 140°C bis 200°C aufweist, mindestens ein amorphes Polyalphaolefin (APAO), welches zweckmäßigerweise eine Applikationstemperatur im Bereich von 140°C bis 200°C aufweist, mindestens ein Ethylenvinylacetat-Copolymer (EVAC), welches zweckmäßigerweise eine Applikationstemperatur im Bereich von 120°C bis 180°C aufweist, mindestens ein Polyester-Elastomer (TPE-E), mindestens ein Polyurethan-Elastomer (TPE-U), mindestens ein Copolyamid-Elastomer (TPE-A) und/oder mindestens ein Vinylpyrrolidon/Vinylacetat-Copolymer, welches zweckmäßigerweise eine Applikationstemperatur im Bereich von 100°C bis 160°C aufweist.

Weiterhin umfasst der Heißschmelzklebstoff vorzugsweise mindestens ein Harz, wie Kolophonium, mindestens ein Terpen oder ein Kohlenwasserstoffharz, sowie zweckmäßigerweise mindestens einen Stabilisator, wie ein primäres Antioxidans ("Radikalfänger", z. B. Phenole) oder ein sekundäres Antioxidans (Peroxidzersetzer), einen Metalldesaktivator, der vorzugsweise mit Metallionen Komplexe bildet, oder ein Lichtschutzmittel. Weitere bevorzugte Zusatzstoffe umfassen Wachse sowie Nukleierungsmittel, die zur Modifizierung teilkristalliner Kunststoffe zugegeben werden können, um sicherzustellen, dass die Kristallbildung bei einer höheren Temperatur eintritt.

Die vorstehend genannten Additive können einzeln oder in Kombination eingesetzt werden.

Im Rahmen einer besonders bevorzugten Variante der vorliegenden Erfindung enthält die Heißschmelzklebstoffzusammensetzung mindestens ein thermoplastisches Poly-α-olefin (P), besonders bevorzugt mindestens ein silangepfropftes Poly-α-olefin (P). Dabei wird das Poly-α-olefin (P), insbesondere das silangepfropfte Poly-α-olefin (P), vorzugsweise bei 25°C fest.

Unter einem "α-Olefin" wird ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Bevorzugte α-Olefine sind Ethylen, Propylen, 1-Buten, 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Unter "Poly-α-olefinen" werden Homopolymere aus α-Olefinen und Copolymere aus mehreren verschiedenen α-Olefinen verstanden.

"Feste" Substanzen bezeichnen im Rahmen der vorliegenden Erfindung alle Substanzen im festen Aggregatzustand, die sowohl ein definiertes Volumen als auch eine definierte Form aufweisen und die Änderungen der Gestalt, beispielsweise durch Deformation, Zerkleinern o. ä., großen Widerstand entgegensetzen. Die festen Substanzen weisen vorzugsweise eine dynamische Viskosität größer 10⁶ Pa s, bevorzugt größer 10⁹ Pa s, besonders bevorzugt größer 10¹² Pa s, insbesondere größer 10¹⁴ Pa s, auf, jeweils gemessen bei 25°C und einer Frequenz von 1 Hz.

Bevorzugt weist das Poly-α-olefin (P), insbesondere das silangepfropfte Poly-α-olefin (P), eine Erweichungstemperatur zwischen 70°C und 150°C, insbesondere zwischen 80°C und 120°C, bevorzugt zwischen 80°C und 100°C, auf. Die Erweichungstemperatur wird hierbei vorzugsweise nach der Ring & Kugel-Methode, z. B. in Anlehnung an DIN EN 1238, ermittelt und bezieht sich vorzugsweise auf das unvernetzte Poly-α-olefin (P).

Derartige silangepfropfte Poly-α-olefine (P) sind dem Fachmann bestens bekannt. Sie lassen sich beispielsweise durch eine Aufpfropfung von ungesättigtem Silan, wie Vinyltrimethoxysilan, auf ein Poly-α-olefin erhalten. Eine detaillierte Beschreibung zur Herstellung besonders geeigneter silangepfropfter Poly-α-olefine wird beispielsweise im Patent US 5,994,747 und in der Patentanmeldung DE 40 80 695 A1 beschrieben, deren Inhalt hiermit in die vorliegende Anmeldung mit eingeschlossen wird.

Ganz besonders bevorzugt ist das silangepfropfte Poly-α-olefin (P) ein silangepfropftes Polyethylen oder Polypropylen.

Darüber hinaus sind auch silangepfropfte Poly-α-olefine besonders vorteilhaft, welche mittels Metallocen-Katalysatoren hergestellte Poly-α-olefine sind, auf welche Silangruppen aufgepfropft wurden. Insbesondere sind dies silangepfropfte Polypropylen-Homopolymere oder Polyethylen-Homopolymere.

Der Pfropfungsgrad des silangepfropften Poly-α-olefins (P) ist vorteilhaft über 1 Gew.-%, insbesondere über 3 Gew.-%, Silan, bezogen auf das Gewicht des Poly-α-olefins. Vorzugsweise beträgt dieser Pfropfungsgrad zwischen 2 Gew.-% und 15 Gew.-%, bevorzugt zwischen 4 Gew.-% und 15 Gew.-%, besonders bevorzugt zwischen 8 Gew.-% und 12 Gew.-%. Wenn für das silangepfropfte Poly-α-olefin über Metallocen-Katalysatoren hergestellte Poly-α-olefine verwendet werden, beträgt der Pfropfungsgrad vorzugsweise zwischen 8 Gew.-% und 12 Gew.-%.

Günstigerweise umfasst die Heißschmelzklebstoffzusammensetzung mindestens zwei verschiedene silangepfropfte Poly-α-olefine (P).

Der Anteil aller silangepfropften Poly-α-olefine (P), bezogen auf die Heißschmelzklebstoffzusammensetzung, beträgt vorzugsweise mehr als 50 Gew.-%, bevorzugt zwischen 60 Gew.-% und 90 Gew.-%.

Es hat sich gezeigt, dass es vorteilhaft ist, wenn die Heißschmelzklebstoffzusammensetzung weiterhin ein bei Raumtemperatur (25°C) festes thermoplastisches Poly-α-olefin (P'), insbesondere ein ataktisches Poly-α-olefin (APAO), enthält.

Diese ataktischen Poly-α-olefine lassen sich durch Polymerisation von α-Olefinen, insbesondere von Ethen, Propen, 1-Buten beispielsweise mit Ziegler-Katalysatoren herstellen. Es lassen sich Homopolymere oder Copolymere von α-Olefinen herstellen. Sie weisen gegenüber anderen Polyolefinen eine amorphe Struktur auf. Bevorzugt weisen die festen, thermoplastischen, ataktischen Poly-α-olefine (P') einen Erweichungspunkt von über 90°C, insbesondere zwischen 90°C und 130°C auf. Das Molekulargewicht Mₙ ist vorzugsweise im Bereich von 7.000 bis 25.000 g/mol. Es kann vorteilhaft sein, wenn für die Herstellung der ataktischen Poly-α-olefine (P') Metallocen-Katalysatoren verwendet werden.

Besonders bevorzugt ist das Gewichtsverhältnis von festem, silangepfropften Poly-α-olefin (P) zu festem, thermoplastischen Poly-α-olefin (P') zwischen 25:1 und 1:25, insbesondere zwischen 1:1 1 und 20:1. Als besonders geeignet hat sich ein Anteil an festem, thermoplastischen Poly-α-olefin (P') von 5 Gew.-% bis 40 Gew.-%, bevorzugt 15 Gew.-% bis 35 Gew.-%, bezogen auf die Heißschmelzklebstoffzusammensetzung, gezeigt.

Im Rahmen einer besonders bevorzugten Ausführungsform der vorliegenden Erfindung enthält die Heißschmelzklebstoffzusammensetzung weiterhin mindestens ein Weichharz (WH) mit einem Schmelzpunkt oder Erweichungspunkt zwischen -10°C und 40°C. Aufgrund der Tatsache, dass sich das Weichharz (WH) bei Raumtemperatur (25°C) sehr nahe am Schmelz- oder Erweichungspunkt befindet, ist es bei Raumtemperatur entweder bereits flüssig oder sehr weich. Ein Weichharz kann ein natürliches Harz oder synthetisches Harz sein.

Vorzugsweise sind derartige Weichharze (WH) mittel- bis höhermolekulare Verbindungen aus den Klassen der Parafin-, Kohlenwasserstoffharze, Polyolefine, Polyester, Polyether, Polyacrylate oder Aminoharze.

Das Weichharz (WH) weist vorzugsweise einen Schmelzpunkt oder Erweichungspunkt zwischen 0°C und 25°C, insbesondere 10°C und 25°C, auf.

Zweckmäßigerweise ist das Weichharz (WH) ein Kohlenwasserstoffharz, insbesondere ein aliphatisches C₅-C₉-Kohlenwasserstoffharz.

Besonders geeignet als Weichharz (WH) hat sich ein aliphatisches C₅-Kohlenwasserstoffharz gezeigt, welches unter dem Handelsnamen Wingtack® von der Firma Cray Valley kommerziell vertrieben wird. Weitere geeignete Weichharze sind beispielsweise Polyterpenharze, wie sie beispielsweise als Sylvares® TR 425 von Arizona Chemical, USA, kommerziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden. Weitere geeignete Weichharze sind beispielsweise Escorez™ 5040 (Exxon Mobil Chemical). Darüber hinaus ist auch die Verwendung von Weichharzen, wie beispielsweise Picco A 10 (Eastman Kodak) und Regalite R1010 (Eastman Kodak), besonders vorteilhaft.

Der Anteil aller Weichharze (WH) beträgt vorzugsweise 20 Gew.-% bis 40 Gew.-%, insbesondere 25 Gew.-% bis 35 Gew.-%, bezogen auf die Heißschmelzklebstoffzusammensetzung.

Es hat sich zudem gezeigt, dass es vorteilhaft ist, wenn das Gewichtsverhältnis aller Weichharze (WH) zu allen silangepfropften Poly-α-olefinen (P) kleiner als 0,5 ist. Bevorzugt ist dieses Gewichtsverhältnis zwischen 0,2 und 0,4 und meist bevorzugt zwischen 0,3 und 0,4.

Im Rahmen einer weiteren besonders bevorzugten Ausführungsform der vorliegenden Erfindung umfasst die Heißschmelzklebstoffzusammensetzung bevorzugt mindestens einen bei 25°C festen, thermoplastischen Polyester (TPE) und bevorzugt mindestens ein Amid (A) der Formel (I) oder (II).

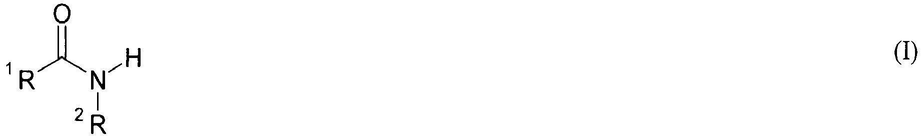

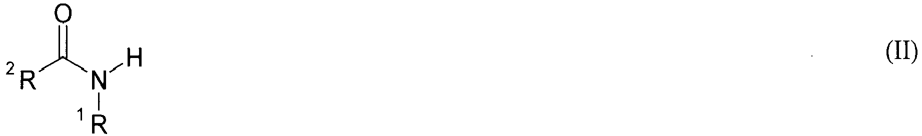

Hierbei steht R¹ für H, eine C₁-C₄-Alkylgruppe oder eine Benzylgruppe und R² steht für eine gesättigte oder ungesättigte C₈-C₂₂-Alkylgruppe.

Unter "ungesättigt" werden hierbei Reste enthaltend Kohlenstoff-Kohlenstoff-Doppel- oder Dreifachbindungen verstanden. Die Reste können auch mehrfach ungesättigt sein, d. h. es können auch mehrere solche Doppel- und/oder Dreifachbindungen in demselben Rest vorhanden sein. Falls dies der Fall ist, können diese Mehrfachbindungen konjugiert zueinander oder isoliert voneinander vorhanden sein. Die Reste R¹ und/oder R² können unabhängig voneinander verzweigt oder unverzweigt sein. Bevorzugt sind die Reste jedoch unverzweigt. Insbesondere Verzweigungen in unmittelbarer Nähe der Amidgruppe sind nachteilig. Somit ist bevorzugt, dass der Kohlenstoff, welcher mit dem Stickstoffatom, respektive dem Kohlenstoffatom, der Amidgruppe direkt verbunden ist, ein Wasserstoffatom-tragender Kohlenstoff ist, insbesondere ein Methylenkohlenstoff ist. Die Reste R² der Amide der Formel (I) weisen bevorzugt eine ungerade Anzahl Kohlenstoffatome auf, während die Reste R² der Amide der Formel (II) bevorzugt eine gerade Anzahl Kohlenstoffatome aufweisen.

Bevorzugt weist das Amid (A) einen Schmelzpunkt zwischen 40°C und 150°C, bevorzugt zwischen 50°C und 110°C, auf.

In einer bevorzugten Variante der Erfindung ist das Amid (A) ein Amid der Formel (I).

Bevorzugte Amide (A) der Formel (I) weisen ein H als Substituenten R¹ auf. Diese Verbindungsklasse der primären Amide sind dem Fachmann unter dem Begriff "Fettsäureamide" bekannt. Allerdings sind nicht alle Fettsäureamide gleich gut geeignet. Insbesondere Fettsäuren mit einem Alkylrest von mehr als 22 Kohlenstoffatomen sind nicht geeignet. Solche Fettsäureamide R²CONH₂ lassen sich beispielsweise durch die Reaktion von den entsprechenden Fettsäuren R²COOH mit Ammoniak umsetzen.

Die Amide (A) der Formel (I), in denen R¹ einen C₁-C₄-Alkylrest oder einen Benzylrest darstellen, lassen sich beispielsweise durch N-Alkylierungen des entsprechenden Fettsäureamids R²CONH² mittels Alkylhalogenen herstellen oder lassen sich aus der Umsetzung eines C₁-C₄-Alkylamins oder Benzylamins mit der entsprechenden Fettsäure R²COOH erhalten.

In einer weiteren bevorzugten Variante der Erfindung ist das Amid (A) ein Amid der Formel (II). Solche Amide lassen sich aus der Umsetzung von Fettsäureaminen R²NH₂ mit der jeweiligen Carbonsäure R¹COOH, respektive der jeweiligen Säurechloride R¹COCl, herstellen. Die hierfür eingesetzten Fettamine ihrerseits werden üblicherweise durch Reduktion aus den entsprechenden Fettsäureamiden oder direkt aus den entsprechenden Fettsäuren hergestellt.

Bei den Amiden (A) handelt es sich bevorzugt um technische Gemische von Amiden mit unterschiedlich langen Resten R², R³ oder R⁴, insbesondere um technische Gemische von Fettsäureamiden.

In einer Ausführungsform ist der Rest R² insbesondere ein ungesättigter C₈-C₂₀-Alkylrest, insbesondere ein CₙH₂ₙ₋ₗ-Alkylrest oder CₙH₂ₙ₋₃-Alkylrest oder CₙH₂ₙ₋₅-Alkylrest mit n = 8 bis 20, bevorzugt ein olefinisch ungesättigter Alkylrest.

In einer anderen Ausführungsform ist der Rest R² ein C₈-C₂₂-Alkylrest, insbesondere ein C₁₅-C₂₂-Alkylrest.

Besonders bevorzugte Amide (A) der Formel (I) sind ausgewählt aus der Gruppe bestehend aus Lauryl-, Myristin-, Palmitin-, Stearin-, Arachin-, Tubercolostaearin-, Palmitolein-, Öl-, Linol-, Linolen-, Elaseostearin-, Eruca- und Arachidonsäureamid.

Bevorzugt sind Amide (A) der Formel (I), insbesondere Stearinsäureamid oder Erucamid. Das bevorzugteste Amid (A) ist Erucamid.

Die Einsatzmenge von Amid (A) ist vorteilhaft derart, dass die Heißschmelzklebstoffzusammensetzung eine Menge von mindestens 5 Gew.-%, insbesondere von 5,0 Gew.-% bis 20,0 Gew.-%, bevorzugt 7,0 Gew.-% bis 15,0 Gew.-%, bezogen auf die Heißschmelzklebstoffzusammensetzung, aufweist.

Die Einsatzmenge von thermoplastischen, silangepfropften Polyolefin (P) ist im Rahmen dieser bevorzugten Ausführungsform vorteilhaft derart, dass die Heißschmelzklebstoffzusammensetzung eine Menge von mindestens 50 Gew.-%, insbesondere von 50 Gew.-% bis 95 Gew.-%, bevorzugt 60 Gew.-% bis 80 Gew.-%, bezogen auf die Heißschmelzklebstoffzusammensetzung, an thermoplastischen, silangepfropften Polyolefin (P) aufweist. Die Einsatzmenge des mindestens einen bei 25°C festen, thermoplastischen Polyester (TPE) ist vorteilhaft im Bereich von 5 Gew.-% bis 30 Gew.-%, bevorzugt von 7 Gew.-% bis 15 Gew.-%, bezogen auf die Heißschmelzklebstoffzusammensetzung.

Der thermoplastische Polyester (TPE) ist vorzugsweise bei Raumtemperatur (25°C) fest. Bevorzugt werden kristalline, vorzugsweise aromatische, thermoplastische Polyester (TPE). Besonders geeignete derartige thermoplastische Polyester (TPE) sind Polycaprolacton-Copolyester-Urethane. Sie weisen insbesondere einen Schmelzflussindex (DIN 53.735) von mehr als 15 g / 10 min, bevorzugt von 25 - 100 g / 10 min, (170°C, 2,16 kg) und insbesondere eine OH-Zahl von weniger als 5 mg KOH/g, bevorzugt von weniger als 4 mg KOH/g, auf.

Die Heißschmelzklebstoffzusammensetzung kann unabhängig von den zuvor genannten optionalen Bestandteilen bei Bedarf zusätzlich weitere thermoplastische Polymere aufweisen. Dies sind insbesondere thermoplastische Polyester (TPE), thermoplastische Polyurethane (TPU) sowie Homo- oder Copolymere von mindestens einem Monomer, welches ausgewählt ist aus der Gruppe bestehend aus Ethylen, Propylen, Butylen, Isobutylen, Isopren, Vinylacetat, Vinylester höherer Carbonsäuren und Ester der (Meth)acrylsäure. Insbesondere geeignet als derartiges zusätzliches thermoplastisches Polymer sind Ethylenvinylacetat-Copolymere (EVA). Selbstverständlich können auch diese thermoplastischen Polymere gepfropft sein.

Als weitere Bestandteile der Heißschmelzklebstoffzusammensetzung sind insbesondere Bestandteile geeignet, welche aus der Gruppe, umfassend Flammschutzmittel, Weichmacher, Haftvermittler, UV-Absorptionsmittel, UV- und Wärmestabilisatoren, optische Aufheller, Fungizide, Pigmente, Farbstoffe, Füllstoffe und Trocknungsmittel, ausgewählt sind.

Bei den Flammschutzmitteln handelt es sich bevorzugt um anorganische Flammschutzmittel, Organophosphor-Flammschutzmittel, Stickstoff basierte Flammschutzmittel oder Intumeszenz-Flammschutzmittel. Halogenierte (bromierte und chlorierte) Flammschutzmittel sind ebenfalls einsetzbar, aufgrund ihrer Risikobewertung jedoch weniger bevorzugt. Beispiele für derartige halogenierte Flammschutzmittel sind polybromierte Diphenylether, z.B. DecaBDE, Tetrabrombisphenol A und HBCD (Hexabromocyclododecan).

Bei den Stickstoff basierten Flammschutzmitteln handelt es sich bevorzugt um Melamine und Harnstoffe.

Bei den Organophosphor-Flammschutzmitteln handelt es sich typischerweise um Aromatische und Alkyl-Ester der Phosphorsäure. Bevorzugt werden TCEP (Trischloroethylphosphat), TCPP (Trischloropropylphosphat), TDCPP (Trisdichloroisopropylphosphat), Triphenylphosphat, Trioktylphosphat (Tris-(2-ethylhexyl)phosphat) und Trisnonylphosphit eingesetzt.

Bei den anorganischen Flammschutzmitteln handelt es sich typischerweise um Hydroxide, wie Aluminiumhydroxid und Magnesiumhydroxid, Borate, wie Zinkborat, Ammoniumverbindungen, wie Ammoniumsulfat, roten Phosphor, Antimonoxide, wie Antimontrioxid und Antimonpentoxid und/oder Schichtsilikate, wie Vermiculit.

Für die Zwecke der vorliegenden Erfindung hat es sich jedoch gezeigt, dass es besonders vorteilhaft ist, wenn die Gewichtssumme aller thermoplastischen, bei 25°C festen, silangepfropften Poly-α-olefine (P), aller gegebenenfalls vorhandenen Weichharze (WH) und aller gegebenenfalls vorhandenen festen, thermoplastischen Poly-α-olefine (P') mehr als 80 Gew.-%, bevorzugt mehr als 90 Gew.-%, der Heißschmelzklebstoffzusammensetzung beträgt.

Der Feststoffgehalt der Heißschmelzklebstoffzusammensetzung ist zweckmäßigerweise größer 80 Gew.-%, bevorzugt größer 90 Gew.-%, insbesondere 100 Gew.-%.

Als besonders vorteilhaft haben sich Heißschmelzklebstoffzusammensetzungen erwiesen, welche im Wesentlichen aus thermoplastischem, bei 25°C festen, silangepfropften Poly-α-olefin (P), gegebenenfalls Weichharz (WH), gegebenenfalls festem, thermoplastischen Poly-α-olefin (P'), sowie Katalysator, welcher die Reaktion von Silangruppen katalysiert, bestehen.

Weiterhin weist die Heißschmelzklebstoffzusammensetzung bei 25°C vorzugsweise eine Dichte im Bereich von 0,80 kg/l bis 0,95 kg/l, insbesondere im Bereich von 0,85 kg/l bis 0,90 kg/l, auf.

Die Herstellung der erfindungsgemäß einsetzbaren Heißschmelzklebstoffe kann auf übliche, dem Fachmann bekannte Art und Weise erfolgen.

Für die Zwecke der vorliegenden Erfindung haben sich weiterhin Polyurethan-Klebstoffe (PUR) ganz besonders bewährt. Hierbei kommen sowohl zweikomponentige als auch einkomponentige, feuchtigkeitshärtende Systeme in Frage. Bei letzteren findet nach dem Klebstoffauftrag eine Vorreaktion zwischen Isocyanaten und Feuchtigkeit aus der Umgebungsluft oder dem Substrat statt: Aus einem Teil des eingesetzten Isocyanats wird unter Abspaltung von Kohlendioxid das entsprechende Amin gebildet, welches anschließend mit Isocyanat unter Abspaltung von CO₂ zu einer Harnstoffbindung abreagiert.

Ganz besonders günstig ist die Verwendung eines Zwei-Komponenten Klebstoffs, der eine isocyanathaltige Komponente A und eine aminhaltige Komponente B umfasst. Die Komponente A enthält hierbei vorzugsweise ein Isocyanat-terminiertes Präpolymer oder Präpolymergemisch mit einer Isocyanat-Funktionalität von 1,7, zweckmäßigerweise von 1,7 < f_{NCO} < 3, besonders bevorzugt im Bereich von 2 bis 3. Besonders bevorzugt ist das Isocyanat-terminierte Präpolymer oder Präpolymergemisch bei 25°C flüssig oder pastös, jedenfalls nicht fest. Der Isocyanatgehalt des Präpolymers beträgt insbesondere 6 Gew.% bis 33 Gew.%, vorzugsweise 8 Gew.% bis 25 Gew.%, besonders bevorzugt 12 Gew.% bis 18 Gew.%. Die Komponente B enthält vorzugsweise wenigstens ein Di- und/oder Polyamin, vorzugsweise ein Polyetherdiamin und/oder Polyetherpolyamin. Besonders bevorzugt ist die Komponente B, insbesondere das Di- und/oder Polyamin, bei 25°C flüssig oder pastös, jedenfalls nicht fest. Weiter weist die Komponente B vorzugsweise im wesentlichen keine Hydroxylgruppen auf.

Bei diesem Zwei-Komponenten Klebstoff wird die Vernetzung des isocyanathaltigen Präpolymeren der Komponente A vorzugsweise durch systematisch in der Komponente B bereitgestellte Amine bewirkt.

In besonders bevorzugten Ausführungsformen handelt es sich bei dem Isocyanatterminierten Präpolymer oder Präpolymergemisch in Komponente A um ein Polyurethan- oder Polyharnstoff-Präpolymer, ggf. in Abmischung mit weiteren Isocyanaten, beispielsweise monomeren Diisocyanaten, polymeren Isocyanaten, oder monofunktionellen Isocyanaten. Ggf. kann auch auf die Anwesenheit von Präpolymeren vollständig verzichtet werden und stattdessen können die entsprechenden Reaktanten (Di-/Polyisocyanate einerseits und Di-/Polyole und/oder Di-/Polyamine andererseits) zur Erzeugung eines Präpolymeren in der Komponente A enthalten sein. Polyurethanpräpolymere bzw. Polyurethanpräpolmyergemische werden im Rahmen der Erfindung bevorzugt.

Geeignete Polyurethan- oder Polyhamstoff-Präpolymere und ihre Herstellung sind dem Fachmann an sich bekannt. Im Besonderen werden genannt:

### ISOCYANATE

Polyisocyanate sind essentiell für die Herstellung von Polyurethanen und Polyharnstoffen. Die generelle Summenformel von Polyisocyanaten ist R-(NCO)ₙ, mit n ≥ 2, und wobei R eine aromatische oder aliphatische Gruppe bedeutet. Mit Hydroxylgruppen abreagierende Polyisocyanate bilden Polyurethane, mit Amingruppen abreagierende Polyisocyanate bilden Polyharnstoffe.

Als Polyisocyanate werden bevorzugt Diisocyanate verwendet, besonders bevorzugt ausgewählt aus der Gruppe bestehend aus 4,4'-Methylenbis(phenylisocyanat) (MDI); Toluoldiisocyanat (TDI); m-Xylylendiisocyanat (XDI); Hexamethylendiisocyanat (HDI); Methylen-bis-(4-cyclohexyldiisocyanat) (HDMI); Naphtalin-1,5-diisocyanat (NDI); 3,3'-Dimethyl-4,4'-biphenyldiisocyanat (TODI); 1,4-Diisocyanatbenzol (PPDI) Phenyl-1,4-4-diisocyanat; Trimethylhexamethyldiisocyanat (TMDI); Isophorondiisocyanat (IPDI); 1,4-Cyclohexyldiisocyanat (CHDI); Diphenylether-4,4'-diisocyanat; p,p'-Diphenyldiisocyanat; Lysindiisocyanat (LDI); 1,3-Bis(isocyanatmethyl)cyclohexan; Polymethylpolyphenylisocyanat (PMDI); und Isomere und/oder Mischungen davon.

Besonders bevorzugt sind MDI und polyMDI Mischungen. Normalerweise enthalten methylenverbrückte Polyphenylpolyisocyanat-Mischungen etwa 20 Gew.-% bis etwa 100 Gew.-% MDI Isomere (typischerweise etwa 20 Gew.-% bis etwa 95 Gew.-% davon entfallen auf das 4,4'-Isomer), wobei der verbleibende Rest von Polymethylenpolyphenylisocyanaten mit höherer Funktionalität (typischerweise etwa zwischen 2,1 und 3,5) und höherem Molekulargewicht gebildet wird. Derartige Isocyanat-Mischungen sind kommerziell erhältlich und/oder können gemäß dem in US 3,362,979 leicht hergestellt werden.

Die Isocyanate können selbstverständlich in Form von höheren Homologen eingesetzt werden, beispielsweise als Isocyanurat, Carbodiimid, Allophanat, Biuret oder Uretdion.

### PRÄPOLYMERE

### Polyurethan-Präpolymere

Zur Herstellung von Polyurethan-Präpolymeren werden Polyole mit den vorstehend genannten Isocyanaten zur Reaktion gebracht. Geeignete Polyole sind dem Fachmann geläufig. Sie haben im Rahmen der Erfindung typischerweise ein Molekulargewicht von etwa 500 g/mol bis etwa 6.000 g/mol und/oder zwei bis vier Hydroxylgruppen. Besonders bevorzugte Polyole sind Polyester, Polyether, Polythioether, Polyacetale und Polycarbonate mit jeweils zwei bis vier Hydroxylgruppen. Bevorzugte Polyether im Rahmen der Erfindung sind dem Fachmann an sich bekannt und können beispielsweise durch Polymerisierung von Epoxiden, wie Ethylenoxid, Propylenoxid, Butylenoxid, Tetrahydrofuran, Styroloxid oder Epichlorhydrin, in Gegenwart von BF₃ oder durch Addition von Epoxiden, insbesondere von Ethylenoxid oder Propylenoxid, an reaktive Wasserstoffe enthaltende Moleküle, wie beispielsweise Wasser, Alkohol oder Amine (beispielsweise niedermolekulare Diole, Triole oder Tetrole; 4,4'-Dihydroxydiphenylpropan; Anilin; Ammoniak; Ethanolamin; Ethylendiamin), hergestellt werden. Polypropylenglykol und Polytetramethylenglykol (PTMG oder PTMEG) werden gegenwärtig bevorzugt.

Bei der Präpolymer-Herstellung können auch an sich bekannte Kettenverlängerer eingesetzt werden, insbesondere Di-/Polyole von niedrigem Molekulargewicht (typischerweise kleiner als 400 g/mol). Genannt werden insbesondere Ethylenglykol, Propylenglykol, Butanglykol, Pentanglykol, Hexanglykol, Benzylglykol, Xylolglykol, Wasser, 1,4-Butandiol, 1,3-Butandiol, 2,3-Dimethyl-2,3-Butandiol, Dipropylenglykol und Tripropylenglycol, Di- und Triethylenglykol, N,N'-Bis-(2-hydroxy-propylanilin) (DHPA), 1,4-Di-(2-hydroxyethyl)hydrochinon (HQEE), Diethanolamin, Triethanolamin, Trimethylolpropan, Glycerin.

Polyalkenylpolyole, Polyetherpolyole oder Polyesterpolyole oder gemischte Polyesterpolyetherpolyole mit vorzugsweise 2 oder 3 Hydroxylendgruppen können mit einem wohldefinierten Überschuss an Isocyanat zu NCO-terminierten Urethanprepolymeren umgesetzt werden. Sie sind auch im Handel erhältlich, beispielsweise von der BAYER AG unter den Handelsmarken Desmodur E22 oder E23. Destillierte Produkte, bei denen die Entfernung des überschüssigen Diisocyanates zu f_{NCO} = 2 führt, sind ebenfalls bekannt und können verwendet werden.

### Polyharnstoff-Präpolmyere

Zur Herstellung von Polyharnstoff-Präpolymeren werden in an sich bekannter Art und Weise Polyamine mit 2 Amingruppen mit einem wohldefinierten Überschuss an di- oder polyfunktionellen Isocyanat-Verbindungen zu NCO-terminierten Harnstoff-Präpolymeren umgesetzt.

Polyharnstoff-Präpolymere werden jedoch im Rahmen der Erfindung gegenüber Polyurethan-Präpolymeren weniger bevorzugt, da sie aufgrund von Wasserstoffbrückenbindungen zur Gelierung bei Raumtemperatur neigen.

### AMINE

### Polyetherpolyamine

Als polymere Polyaminkomponente können vorzugsweise Verbindungen mit einer Funktionalität von 2 bis 4 eingesetzt werden, wobei insbesondere mehr als 50 % der aktiven Wasserstoffatome von primären oder sekundären Aminen gebildet werden. Insbesondere werden genannt: Polyoxyalkylenamine, wie beispielsweise Polyoxypropylendiamin, Polyoxyethylendiamin, Polytetramethylenetherdiamin, Polyoxypropylentriamin, Polyoxyethylentriamin (bekannt unter dem Handelsnamen Jeffamine von Huntsman); sowie, falls aromatische Komponenten tolerabel für eine spezifische Anwendung sind: Polyethylenglykol-di(p-aminobenzoat); Polyethylenglykol-di(o-aminobenzoat); Polyethylenglykol-di(m-aminobenzoat); Polytetramethylenglykol-di(p-aminobenzoat); Polytetramethylenglykol-di(o-aminobenzoat); Polytetramethylenglykol-di(m-aminobenzoat). Als Polyamine können Polyethylenoxid-Polypropylenoxidpolyether eingesetzt werden, insbesondere mit einer Funktionalität von ungefähr zwei bis ungefähr drei und/oder mit einem Molekulargewicht von ungefähr 200 g/mol bis ungefähr 6.000 g/mol (beschrieben beispielsweise in US 4,433,067). Selbstverständlich können auch Mischungen aminterminierter Polyether im Rahmen der Erfindung verwendet werden.

Vorzugsweise werden Polyoxyalkylendiamine mit einem mittleren Molekulargewicht im Bereich von etwa 150 g/mol bis etwa 7.500 g/mol, vorzugsweise im Bereich von etwa 250 g/mol bis etwa 6.000 g/mol, eingesetzt.

### Amine als Kettenverlängerer

Im Rahmen der Erfindung können auch aminische Kettenverlängerer eingesetzt werden, vorzugsweise mit einem Molekulargewicht typischerweise kleiner als 400 g/mol. Genannt werden insbesondere aliphatische Diamine, wie beispielsweise in US 4,246,363 und US 4,269,945 beschrieben. Ebenso kann ein kettenverlängerndes aliphatisches Diamin ausgewählt sein aus der Gruppe bestehend aus Ethylendiamin; Neopentandiamin; 1,2- und 1,3-Propandiamin; 1,6-Hexamethylendiamin; 1,8-Octamethylendiamin; 1,12-Dodecamethylendiamin; Cyclohexyldiamin; 4,4'-Bis(para-aminocyclohexyl)methan; 2,2'-Dimethyl-4,4'-methylenbis(cyclohexylamin) (Dimethyldicyclan); Isophorondiamin; 4,7-Dioxadecan-1,10-diamin; 4,7,10-Trioxadecan-1,13-diamin, Tetramethylethylendiamin; Pentamethyldiethylentriamin; Dimethylcyclohexylamin; Tetramethyl-1,3-butandiamin; Pentamethyldipropylentriamin; Bis-(dimethylaminoethylether)triethylenglykoldiamin; 4,4'-Methylen-bis-(2-ethyl-6-methylcyclohexylamin) (M-MECA); 4,4'-Methylen-bis-(2,6-diethylcyclohexylamin) (MDECA); 4,4'-Bis(sek-butylamino)-dicyclohexylmethan (im Handel erhältlich als Clearlink 1000) und Monomere davon; 3,3'-Dimethyl-4,4'-bis(sekbutylamino)-dicyclohexylmethan (im Handel erhältlich als Clearlink 3000) und Monomere davon; N,N'-Diisopropylisophorondiamin (im Handel erhältlich als Jefflink 754); Amine der Aspartamsäure, wie z. B. N,N'-Diethylmaleat-2-methylpentamethylendiamin (im Handel erhältlich als Desmophen NH-1220), N,N'-Diethylmaleat-amino-dicyclohexylmethan (im Handel erhältlich als Desmophen NH-1420), und N,N'-Diethylmaleat-amino-dimethyl-dicyclohexylmethan (im Handel erhältlich als Desmophen NH-1520).

Auch aromatische Diamine (wie beispielsweise beschrieben in US 4,659,747) können im Rahmen der Erfindung als Kettenverlängerer eingesetzt werden. Konkret werden genannt: Dimethylbenzylamin; Diethylbenzylamin; 1,2-Dimethylimidazol; 2-Methylimidazol; 1,2-, 1,3- oder 1,4-Bis(sek-butylamino)benzol (im Handel erhältlich als Unilink 4100); 4,4'-Bis(sek-butylamino)-diphenylmethan (im Handel erhältlich als Unilink 4200); Trimethylenglykol-di(p-aminobenzoat) (im Handel erhältlich als Versalink 740M); Trimethylenglykol-di(o-aminobenzoat); Trimethylenglykol-di(m-aminobenzoat); Polyethylenglykol-di(p-aminobenzoat); Polyethylenglykol-di(o-aminobenzoat); Polyethylenglykol-di(m-aminobenzoat); Polytetramethylenglykol-di(p-aminobenzoat); Polytetramethylenglykol-di(o-aminobenzoat); Polytetramethylenglykol-di(m-aminobenzoat); aromatische Diamine, wie z. B. 3,5-Diethyl-2,4-toluoldiamin und 3,5-Diethyl-2,6-toluoldiamin (im Handel erhältlich als Ethacure 100) und 3,5-Dimethylthio-2,4-toluoldiamin und 3,5-Dimethylthio-2,6-toluoldiamin (im Handel erhältlich als Ethacure 300); 4,4'-Methylen-bis(2-chloranilin); Diethylentriamin; Triethylentetramin; Tetraethylenpentamin; Methylendianilin (MDA); m-Phenylendiamin; Diethyltoluoldiamin; 4,4'-Methylen-bis-3-(chlor-2,6-diethylbenzylamin) (MCDEA); Diethyltololdiamin (DETDA); 4,4'-Methylen-bis-(2-ethyl-6-methylanilin) (NMMEA); 4,4'-Methylen-bis-(2,6-diethylanilin) (MDEA); 4,4'-Methylen-bis-(2-isopropyl-6-methylanilin) (MMIPA); 4,4'-Bis(sek-butylamino)diphenyl-methan; Phenylendiamin; Methylen-bisortho-chloranilin (MBOCA); 4,4'-Methylen-bis-(2-methylanilin) (MMA); 4,4'-Methylen-bis-(2-chlor-6-ethylanilin) (MCEA);); 1,2-Bis(2-aminophenylthio)ethan; N,N'-Di-alkyl-p-phenylendiamin; 4,4'-Methylen-bis(2,6-diisopropylanilin) (MDIPA); und Dimethylthiotoluoldiamin (2,4 und 2,6-Isomere) (DMTDA); 4-Chlor-3,5-diaminobenzoesäureisobutylester (CDABE) sowie Mischungen davon.

Das Mischungsverhältnis der vorgenannten Kettenverlängerer mit den Polyaminen kann vom Fachmann leicht in Routineversuchen auf das gewünschte Verhältnis von Hart- und Weichsegmenten abgestimmt werden. Hierbei sind die fachüblichen Anforderungen an die Mischbarkeit der Komponenten zu beachten.

Die vorstehend genannten primären Polyamine können im Rahmen der Erfindung fachüblich weiter modifiziert werden, beispielsweise mit Epoxiden (US 6,723,821), mit Acrylaten (über eine Michael-Addition, wie beispielsweise in US 5,359,123 und US 5,192,814 beschrieben) oder auch mit Alkoxysilanen (vorzugsweise mit Aminosilanen, wie beispielsweise in WO 02059224 beschrieben) sowie mit Isocyanatosilanen, Epoxy-Silanen oder Acrylato-Silanen.

Durch den Einbau von Alkoxysilylverbindungen in die Isocyanat und/oder die Aminkomponente sind Klebstoffe mit einem verbesserten Eigenschaftsprofil, insbesondere hinsichtlich Haftung, Wasser- oder Säurebeständigkeit, erhältlich.

Besonders bevorzugte Amine in der Komponente B sind Polyoxypropylendiamine, vorzugsweise mit einem mittleren Molekulargewicht von etwa 2.000 g/mol (im Handel erhältlich beispielsweise unter dem Handelsnamen Jeffamine D-2000 gemäß CAS 9046-10-0; Huntsman Corporation, Houston, Texas, USA); primäre, verzweigte Polyethertriamine, vorzugsweise mit einem mittleren Molekulargewicht von etwa 5.000 g/mol (im Handel erhältlich beispielsweise unter dem Handelsnamen Jeffamine T-5000 gemäß CAS 64852-22-8; Huntsman Corporation, Houston, Texas, USA); substituierte, insbesondere aromatische Diamine, wie beispielsweise Diethyltoluylendiamin (im Handel erhältlich beispielsweise unter dem Handelsnamen Härter DT bzw. Härter VP LS 2214; Bayer AG, Leverkusen, Deutschland) oder N,N'-Dialkylaminodiphenylmethan (im Handel erhältlich beispielsweise unter dem Handelsnamen Unilink™ 4200 Diamine; UOP GmbH, Erkrath, Deutschland).

Die Funktionalität der NCO-terminierten Präpolymere, insbesondere der Urethanpräpolymere, ist günstigerweise 1,7, vorzugsweise von 1,7 < f_{NCO} < 3, besonders bevorzugt im Bereich von 2 bis 3. Funktionalitäten > 2 erklären sich sowohl durch zusätzlich vorliegende, freie Isocyanate als auch durch Allophanatgruppen, welche durch Reaktion von Urethangruppen mit weiteren NCO-Einheiten entstehen können; derartige Präpolymere werden daher in der Fachwelt oftmals auch "Quasi-Präpolymere" genannt. Allophanatgruppen in Komponente A werden bei der weiteren Umsetzung mit Komponente B wieder in ein Urethan und freies Isocyanat gespalten.

In bevorzugten Ausführungsformen beträgt das stöchiometrische Verhältnis von Isocyanatgruppen in Komponente A zu Amingruppen in Komponente B etwa 0,5 bis etwa 2, vorzugsweise etwa 0,9 bis etwa 1,2, besonders bevorzugt etwa 1.

Über die Auswahl und ggf. Kombination verschiedener Di- oder Polyamine kann der Fachmann leicht in Routineversuchen wesentliche Eigenschaften des Zwei-Komponenten Klebstoffs ausschließlich über die Komponente B einstellen, wie z.B. die Elastizität, Wasserfestigkeit, Reaktionsgeschwindigkeit usw.; die Komponente A kann hingegen beibehalten werden, was sowohl produktionsseitig beim Hersteller als auch in der Bereitstellung beim Verbraucher erhebliche Flexibilität ermöglicht.

Die Polyurethan-Klebstoffzusammensetzungen können selbstverständlich die fachüblichen weiteren Additive enthalten, wie sie in der Polyurethan/Polyharnstoffindustrie allgemein üblich sind. Zum Beispiel: Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Lösemittel; anorganische und organische Füllstoffe, wie zum Beispiel gemahlene oder gefällte Calciumcarbonate, welche gegebenenfalls mit Stearaten beschichtet sind, Russe, Kaoline, Aluminiumoxide, Kieselsäuren und PVC-Pulver; Fasern, beispielsweise aus Polyethylen oder aus Polyamid; Pigmente; rheologie-Modifizierer, wie beispielsweise Verdickungsmittel, zum Beispiel Harnstoffverbindungen, Polyamidwachse, Bentonite oder pyrogene Kieselsäuren; Haftvermittler, insbesondere Silane, wie Vinylsilane, Isocyanatosilane in der Isocyanatkomponente und mit Aldehyden zu Aldiminosilanen umgesetzte Aminosilane in der Aminkomponente; Trocknungsmittel, wie beispielsweise p-Tosylisocyanat und andere reaktive Monoisocyanate, Vinyl Trimethoxysilan, Orthoameisensäureester, Calciumoxid oder Molekularsiebe (z. B. Zeolite); Stabilisatoren gegen Wärme, Licht- und UV-Strahlung; flammhemmende Substanzen; oberflächenaktive Substanzen, wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Bezüglich solcher Additive wird verwiesen auf Polyurethane Handbook 2nd edition, Günter Oertel (Editor), Hanser Publishers Munich 1994, Seiten 98 bis 128 , dessen Offenbarung hinsichtlich fachüblicher Additive wird hiermit durch Bezugnahme in die Offenbarung der vorliegenden Erfindung eingeschlossen.

Unter dem Einfluss von Wasser, insbesondere in Form von Luftfeuchtigkeit, hydrolysieren die Silangruppen in Silangruppen-haltigen Klebstoffen, insbesondere in silangepfropften Poly-α-olefinen (P) oder in Silangruppen-haltigen Polyurethan-Klebstoffen, zu Silanolgruppen (-SiOH), welche ihrerseits miteinander reagieren und so unter Bildung von Siloxangruppen (-Si-O-Si-) zur Vernetzung der Klebstoffzusammensetzung führen. Derartige Klebstoffzusammensetzungen werden als reaktive Klebstoffe bezeichnet und im Rahmen der vorliegenden Erfindung besonders bevorzugt.

Die Klebstoffzusammensetzung enthält in diesem Fall bevorzugt mindestens einen Katalysator, welcher die Reaktion von Silangruppen katalysiert, insbesondere in einer Menge von 0,01 - 1,0 Gew.-%, bevorzugt von 0,01 - 0,5 Gew.-%, bezogen auf die Klebstoffzusammensetzung. Besonders geeignete Katalysatoren umfassen insbesondere Zinn-organische Verbindung, bevorzugt Dibutylzinndilaurat (DBTL).

Zur Herstellung solcher reaktiver Klebstoffzusammensetzungen ist zweckmäßigerweise darauf zu achten, dass man möglichst gut getrocknete Rohstoffe verwendet und dass die Klebstoffe während der Herstellung, Lagerung und Applikation möglichst vor dem Kontakt mit Wasser oder Luftfeuchtigkeit geschützt werden.

Im Rahmen einer ersten besonders bevorzugten Variante der vorliegenden Erfindung werden nicht diffusionsoffene Klebstoffzusammensetzungen, insbesondere nicht diffusionsoffene Heißschmelzklebstoffzusammensetzungen, eingesetzt, welche vorzugsweise mindestens ein thermoplastisches Poly-α-olefin (P), besonders bevorzugt mindestens ein silangepfropftes Poly-α-olefin (P), umfassen, das vorzugsweise bei 25°C fest wird. Im Falle der Verwendung von reaktiven Klebstoffen führt die Vernetzung der Klebstoffzusammensetzung vorzugsweise zu einer nicht diffusionsoffenen Sperrschicht zwischen den Platten, die das Eindringen von Wasser in den Kernbereich des Verbundkörpers verhindert.

Im Rahmen einer weiteren besonders bevorzugten Variante der vorliegenden Erfindung werden diffusionsoffene Klebstoffzusammensetzungen, insbesondere diffusionsoffene Polyurethan-Klebstoffzusammensetzungen, eingesetzt. Ganz besonders günstig ist in diesem Zusammenhang die Verwendung eines Zwei-Komponenten Klebstoffs, der eine isocyanathaltige Komponente A und eine aminhaltige Komponente B umfasst. Die Komponente A enthält hierbei vorzugsweise ein Isocyanat-terminiertes Präpolymer oder Präpolymergemisch mit einer Isocyanat-Funktionalität von 1,7, zweckmäßigerweise von 1,7 < f_{NCO} < 3, besonders bevorzugt im Bereich von 2 bis 3. Besonders bevorzugt ist das Isocyanat-terminierte Präpolymer oder Präpolymergemisch bei 25°C flüssig oder pastös, jedenfalls nicht fest. Der Isocyanatgehalt des Präpolymers beträgt insbesondere 6 Gew.% bis 33 Gew.%, vorzugsweise 8 Gew.% bis 25 Gew.%, besonders bevorzugt 12 Gew.% bis 18 Gew.%. Die Komponente B enthält vorzugsweise wenigstens ein Di- und/oder Polyamin, vorzugsweise ein Polyetherdiamin und/oder Polyetherpolyamin. Besonders bevorzugt ist die Komponente B, insbesondere das Di- und/oder Polyamin, bei 25°C flüssig oder pastös, jedenfalls nicht fest. Weiter bevorzugt weist die Komponente B im wesentlichen keine Hydroxylgruppen auf.

Im Falle der Verwendung von reaktiven Klebstoffen führt die Vernetzung der Klebstoffzusammensetzung vorzugsweise zu einer diffusionsoffenen Sperrschicht zwischen den Platten, die das Eindringen von Wasser in den Kernbereich des Verbundkörpers nicht stört.

Erfindungsgemäß wird die Diffusionsoffenheit der Klebstoffzusammensetzung mit Bezug zu DIN 4108-3 vorzugsweise in Anlehnung an EN ISO 7783-2 ermittelt. Die Dicke der zu untersuchenden Probe beträgt vorzugsweise 1 mm. Die Messung erfolgt vorzugsweise in einem Trockenklima (zwischen 0 % und 65 % relative Luftfeuchtigkeit bei 20°C). Für die Zwecke der vorliegenden Erfindung weisen nicht diffusionsoffene Klebstoffzusammensetzungen vorzugsweise einen s_{D}-Wert (Wasserdampfdiffusionsäquivalente Luftschichtdicke) größer 0,5 m, bevorzugt größer 0,7 m, insbesondere größer 0,8 m, auf. Bei diffusionsoffenen Klebstoffzusammensetzungen ist der s_{D}-Wert vorzugsweise höchstens 0,5 m, bevorzugt kleiner 0,3 m, insbesondere kleiner 0,2 m.

Im Rahmen der vorliegenden Erfindung weisen die Styrolpolymerschaumstoffplatten jeweils auf mindestens einer Oberfläche eine Schicht auf, die jeweils mindestens 90,0 %, bevorzugt mindestens 92,5 %, zweckmäßigerweise mindestens 95,0 %, besonders bevorzugt mindestens 97,5 %, noch mehr bevorzugt mindestens 99,0 %, günstigerweise mindestens 99,5 %, ganz besonders bevorzugt mindestens 99,9 %, insbesondere mindestens 99,99 %, der Gesamtfläche der jeweiligen Oberfläche bedeckt.

Weiterhin weisen die Styrolpolymerschaumstoffplatten vorzugsweise entsprechende Schichten auf jeweils mindestens 50,0 %, bevorzugt mindestens 75,0 %, zweckmäßigerweise mindestens 90,0 %, besonders bevorzugt mindestens 95,0 %, noch mehr bevorzugt mindestens 99,0 %, günstigerweise mindestens 99,5 %, ganz besonders bevorzugt mindestens 99,9 %, insbesondere mindestens 99,99 %, der Gesamtoberfläche der jeweiligen Styrolpolymerschaumstoffplatte auf.

Für die Zwecke der vorliegenden Erfindung umfassen die Schichten im Regelfall möglichst keine Löcher oder Öffnungen, durch die Flüssigkeiten, wie Wasser, in das Innere der Styrolpolymerplatten leicht eindringen können. Die Schichten weisen daher vorzugsweise weniger als 5, bevorzugt weniger als 2, insbesondere keine, Löcher oder Öffnungen pro m² Oberfläche auf.

Im Rahmen einer besonderen Variante der vorliegenden Erfindung soll jedoch die Permeabilität des Plattenverbundes möglichst hoch sein. In diesem Fall ist es vorteilhaft, die Durchlässigkeit des Plattenverbunds durch Löcher in den jeweiligen Schichten weiter zu erhöhen. Hier weisen die Schichten daher vorzugsweise mehr als 20, bevorzugt mehr als 50, insbesondere mehr als 200, Löcher oder Öffnungen pro m² Oberfläche auf.

Die Dicke der Schichten liegt jeweils vorzugsweise im Bereich von 0,01 mm bis 1,0 mm, bevorzugt im Bereich von 0,05 mm bis 1,0 mm, insbesondere im Bereich von 0,05 bis 0,5 mm.

Erfindungsgemäß umfassen die Schichten jeweils ein Styrolpolymer. Der Styrolpolymeranteil, bezogen auf jede Schicht, beträgt vorzugsweise mindestens 50,0 Gew.-%, bevorzugt mindestens 75,0 Gew.-%, besonders bevorzugt mindestens 90,0 Gew.-%, insbesondere mindestens 95,0 Gew.-%.

Weiterhin weisen die Schichten jeweils Bereiche mit einer Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, auf. Die Fläche dieser Bereiche beträgt vorzugsweise mindestens 10,0 %, bevorzugt mindestens 25,0 %, zweckmäßigerweise mindestens 50,0 %, besonders bevorzugt mindestens 75,0 %, noch mehr bevorzugt mindestens 90,0 %, günstigerweise mindestens 95,0 %, ganz besonders bevorzugt mindestens 99,0 %, insbesondere mindestens 99,9 %, der Oberfläche der jeweiligen Schicht. Zweckmäßigerweise sind die Bereiche Teil der Klebfläche, die die Styrolpolymerplatten über die Klebstoffzusammensetzung miteinander verbindet.

Günstigerweise weisen die Styrolpolymerschaumstoffplatten jeweils auf der zu verklebenden Seite, d. h. der der Klebstoffzusammensetzung zugewandten Seite, einen Bereich mit einer Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, auf.

Weiterhin ist es für die vorliegende Erfindung besonders vorteilhaft, wenn mindestens eine Styrolpolymerschaumstoffplatte, vorzugsweise beide Styrolpolymerschaumstoffplatten, auf der nicht zu verklebenden Seite, d. h. der der Klebstoffzusammensetzung abgewandten Seite, einen Bereich mit einer Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, aufweist. In diesem Fall beträgt die Fläche dieser Bereiche vorzugsweise mindestens 10,0 %, bevorzugt mindestens 25,0 %, zweckmäßigerweise mindestens 50,0 %, besonders bevorzugt mindestens 75,0 %, noch mehr bevorzugt mindestens 90,0 %, günstigerweise mindestens 95,0 %, ganz besonders bevorzugt mindestens 99,0 %, insbesondere mindestens 99,9 %, der Gesamtoberfläche der nicht zu verklebenden Seite.

Im Rahmen der vorliegenden Erfindung bezeichnet die Rauheit Rt einer Styrolpolymerschaumstoffplatte den vertikalen Abstand zwischen dem höchsten und dem niedrigsten Punkt in dem Profil der Styrolpolymerschaumstoffplatte. Für weitere Details wird auf die Norm ASME B46.1-2002 "Surface Texture (Surface Roughness, Waviness, and Lay", insbesondere Seite 7, rechte Spalte, vorletzter Absatz, verwiesen.

Für die vorliegenden Zwecke wird die Rauheit einer Styrolpolymerschaumstoffplatte vorzugsweise mittels mikroskopischer Querschnittaufnahmen an den Verbundplatten ermittelt. In diesen Aufnahmen ist insbesondere für die mit der Klebeschicht in Kontakt stehende Oberfläche der Styrolpolymerschaumstoffplatte die Rauheit des Profils sehr gut zu erkennen.

Styrolpolymerschaumstoffplatten mit der vorliegend geforderten Schicht und der geforderten Rauheit können auf an sich bekannte Weise erhalten werden. Als besonders geeignet zur Herstellung solcher Styrolpolymerschaumstoffplatten hat sich jedoch die thermische Prägung von Styrolpolymerplatten mit einer Schicht, insbesondere mit einer Extrusionshaut, mittels einer temperierten Walze mit vorzugsweise stochastischer Oberflächenstruktur herausgestellt. Bevorzugt weist die Walzenoberfläche zufällig angeordnete, längliche bis kornartige Erhöhungen und Vertiefungen auf. Die Platte wird vorzugsweise durch einen Spalt zwischen einer temperierten Stahlwalze mit Oberflächenstruktur (Negativ) und einer Gegenwalze geführt, wodurch die Oberflächenstruktur auf die eine Plattenoberfläche übertragen wird (Positiv). Die Oberfläche der Gegenwalze kann unstrukturiert oder ebenfalls oberflächenstrukturiert sein. Im letzteren Fall für dies zu Platten mit der entsprechenden Oberflächenstruktur auf zwei sich gegenüberliegenden Seiten.

Mit dem einstellbaren Spaltmaß zwischen den beiden Walzen lässt sich gleichzeitig die Plattendicke "kalibrieren" oder einstellen. Zudem werden Unebenheiten der Plattenoberfläche korrigiert. Ein Spaltmaß im Bereich von 95 % bis kleiner 100 %, insbesondere im Bereich von 96,5 % bis 98,5 %, jeweils bezogen auf die Dicke der zu verklebenden Styrolpolymerplatten, hat sich im Rahmen der vorliegenden Erfindung ganz besonders bewährt.

Für die Zwecke der vorliegenden Erfindung liegt die Breite der zufällig angeordneten Oberflächenstrukturelemente der Walze bevorzugt im Bereich von 0,01 bis 1,0 mm, insbesondere zwischen 0,05 und 0,5 mm, deren Länge bevorzugt im Bereich von 0,01 bis 10,0 mm, insbesondere zwischen 0,05 und 5,0 mm. Die Oberflächentemperatur der Walze wird zweckmäßigerweise im Bereich von 130°C bis 200°C gewählt.

Das Verkleben der Styrolpolymerschaumstoffplatten kann ebenfalls auf an sich bekannte Weise erfolgen. Besonders bewährt hat sich jedoch ein Verfahren, bei welchem man
(i) zwei Styrolpolymerschaumstoffplatten bereitstellt, die jeweils auf mindestens einer Oberfläche eine Schicht aufweisen, die
   a. jeweils mindestens 90,0 % der Gesamtfläche der jeweiligen Oberfläche bedeckt,
   b. vorzugsweise 0,05 mm bis 1,0 mm dick ist und
   c. mindestens ein Styrolpolymer umfasst,
   wobei die Schichten jeweils Bereiche mit einer Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, aufweisen,
(ii) eine Klebstoffzusammensetzung auf einen Bereich der ersten Styrolpolymerschaumstoffplatte aufbringt, der eine Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, aufweist,
(iii) die Klebstoffzusammensetzung auf der der ersten Platte abgewandten Seite mit einem Bereich der zweiten Styrolpolymerschaumstoffplatte in Kontakt bringt, der eine Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, aufweist,
(iv) die Klebstoffzusammensetzung ggf. auskühlen und aushärten lässt,
(v) die Auftragsmenge der Klebstoffzusammensetzung, bezogen auf die Klebefläche, im Bereich 40 g/m² bis 250 g/m², bevorzugt 80 g/m² bis 150 g/m², wählt.

In diesem Zusammenhang ist es besonders vorteilhaft, Styrolpolymerschaumstoffplatten zu verwenden, die auf zwei sich gegenüberliegenden Bereichen jeweils eine Rauheit Rt im Bereich von 0,05 mm bis 1,0 mm, bevorzugt im Bereich von 0,1 mm bis 1,0 mm, besonders bevorzugt im Bereich von 0,1 mm bis 0,5 mm, insbesondere im Bereich von größer 0,1 mm bis 0,3 mm, aufweisen, um eventuelle "Schüsselungen" des resultierenden Verbunds bestmöglich zu vermeiden.

Vorzugsweise wird die Klebstoffzusammensetzung durch Aufheizen verflüssigt, indem man die thermoplastischen Inhaltsstoffe aufschmilzt und/oder in einen fließfähigen Zustand überführt. Die Viskosität der Klebstoffzusammensetzung sollte dabei auf die Applikationstemperatur angepasst werden. Vorzugsweise ist die Applikationstemperatur 100°C bis 200°C. Bei dieser Temperatur ist der Klebstoff gut verarbeitbar. Die Viskosität beträgt vorzugsweise in diesem Temperaturbereich 1.500 mPas - 50.000 mPas, insbesondere 2.000 mPas - 50.000 mPas, vorzugsweise gemessen bei einer Frequenz von 1 Hz. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt.

Bei Mehr-Komponenten-Klebstoffen werden die einzelnen Komponenten zweckmäßigerweise nacheinander auf die Styrolpolymerschaumstoffplatte aufgebracht.

Im Übrigen kann die Klebstoffzusammensetzung auf an sich bekannte Weise aufgebracht werden, insbesondere durch Kaschieren, vorzugsweise als Film (Spaltmaß vorzugsweise 0,1 mm - 1 mm), Punkt oder Raupe, oder durch Sprühverfahren. Dabei wird für den Einsatz in automatisierten Anlagen die Verwendung geeigneter Filtersysteme empfohlen.

Zum Auftragen der Klebstoffzusammensetzung eignen sich insbesondere Klebewalzen oder Düsen, aus denen die Klebstoffzusammensetzung aufgesprüht wird. Mit den Walzen lässt sich jede gewünschte Verteilung (sowohl hinsichtlich der flächenmäßigen Ausdehnung als auch hinsichtlich der Dicke des Auftrages) der Klebstoffzusammensetzung auf die Berührungsflächen herbeiführen. Der Auftrag kann dabei wie ein Farbauftrag gehandhabt werden. In dem Sinne sind anstelle der Walzen auch Auftragsplatten nach dem Vorbild von Druckplatten geeignet.

Düsen sind im Rahmen der vorliegenden Erfindung als Klebewerkzeug besonders geeignet. In der beheizten Düse ist die Klebstoffzusammensetzung bei entsprechender Erwärmung vorzugsweise so dünnflüssig, dass sie als Flüssigkeit aufgesprüht werden kann. Die Klebstoffzusammensetzung kann dabei in der Form von Tröpfchen oder als Strahl gesprüht werden. Zur Erreichung eines teilflächigen Klebstoffauftrages können die Kleberstrahlen in Abständen voneinander und die Tröpfchen in entsprechender Streuung aufgetragen werden. Es kann auch ein Aufstrich mittels Quast oder dergleichen erfolgen. Ein vollflächiger Auftrag wird für nicht diffusionsoffene Klebstoffe besonders bevorzugt, da er zur Ausbildung einer Sperrschicht im Verbundkörper führt, die das Eindringen von Feuchtigkeit in den Kernbereich des Verbundkörpers verlangsamen kann. Weiter verhindert der vollflächige Auftrag ebenfalls das stirnseitige Eindringen von Wasser in die Klebefuge. Für diffusionsoffene Klebstoffe ist hingegen ein teilflächiger Auftrag des Klebstoffs besonders vorteilhaft, da dies die Durchlässigkeit des resultierenden Plattenverbunds weiter erhöht.

Die Klebstoffmenge kann prinzipiell frei gewählt und auf die jeweilige Anwendung gezielt angepasst werden. Für die Zwecke der vorliegenden Erfindung besonders vorteilhafte Auftragsmengen an Klebstoffzusammensetzung liegen jedoch im Bereich von 40 g bis 250 g Klebstoffzusammensetzung pro Quadratmeter Klebefläche, bevorzugt im Bereich von 60 g bis 150 g, insbesondere im Bereich von 60 g bis 120 g Klebstoffzusammensetzung pro Quadratmeter Klebefläche.

Das durch die Abkühlung vorzugsweise erfolgende Erstarren und Verfestigen des Klebstoffes bewirkt einen schnellen Festigkeitsaufbau und hohe Anfangshaftfestigkeit des Klebverbundes. Es sollte darauf geachtet werden, dass das Verkleben innerhalb der Zeit erfolgt, in der der Klebstoff noch nicht zu stark abgekühlt ist, d. h. das Verkleben erfolgt vorzugsweise, so lange der Klebstoff noch flüssig oder zumindest noch klebrig und verformbar ist.

Zusätzlich zu dieser physikalischen Verfestigung wird der Klebstoff nach dem Erkalten vorzugsweise durch den Einfluss von Wasser, insbesondere von Luftfeuchtigkeit, vernetzen und so innerhalb einer kurzen Zeit von typischerweise wenigen Stunden oder Tagen weiter an mechanischer Festigkeit gewinnen. Im Gegensatz zu den nicht reaktiven Klebstoffzusammensetzungen lässt sich die reaktive Klebstoffzusammensetzung nicht reversibel erhitzen und dadurch wieder verflüssigen. Somit ist der Einsatz von reaktiven Klebstoffen, insbesondere von Heißschmelzklebstoffzusammensetzungen, umfassend silangepfropfte Poly-α-olefinen (P), für die Zwecke der vorliegenden Erfindung besonders vorteilhaft, da eine permanente Verklebung der Platten gewährleistet wird. Darüber hinaus bedingt die Vernetzung der Heißschmelzklebstoffzusammensetzung ein bedeutend geringeres Kriechen.

Im Rahmen der vorliegenden Erfindung ist es besonders günstig, extrudierte Styrolpolymerschaumstoffplatten, insbesondere Polystyrolschaumstoffplatten, miteinander zu verkleben, deren Extrusionshaut an den zu verklebenden Stellen vor der Verklebung nicht entfernt wurden. Dies führt zur Ausbildung von zusätzlichen Diffusionsbremsschichten im Verbundkörper (Klebeschicht, Extrusionshäute), die insbesondere bei beidseitiger Wassereinwirkung auf den Verbundkörper eine Feuchtigkeitsanreicherung im Kernbereich des Plattenverbunds verlangsamen und somit eine bessere Dämmwirkung über einen längeren Zeitraum gewährleisten. Andererseits ist bei ständigem einseitigem Wasserkontakt die Feuchteanreicherung im Verbundkörper vergleichbar mit einer gleich dicken einschichtigen Platte, da auf der Nassseite das Eindringen und auf der Trockenseite das Austrocknen von Feuchte gleichermaßen reduziert ist.

Zur Sicherstellung einer zweckmäßigerweise vollflächigen, zugfesten Verbindung kann eine zusätzliche Oberflächenbehandlung vorteilhaft sein. Dies kann zum Beispiel ein Reinigen oder ein Auftragen eines Primers darstellen. Bevorzugt ist in weniger anspruchsvollen Anwendungen jedoch das Aufbringen von Primern nicht notwendig.

Der Schritt des Kontaktierens (iii) erfolgt vorzugsweise bei einer Klebstofftemperatur von 50°C oder mehr, insbesondere einer Temperatur zwischen 50°C und 200°C, bevorzugt zwischen 100°C und 150°C.

Im Rahmen der vorliegenden Erfindung unterstützt man das Verkleben der Styrolpolymerschaumstoffplatten vorzugsweise durch Anlegen eines Anpressdrucks, insbesondere zwischen 0,1 bar und 1 bar, bevorzugt von mindestens 0,8 bar.

Der erfindungsgemäß einzusetzende Kleber erlaubt die Herstellung von Styrolpolymerschaumstoff-Verbundkörpern mit exzellenter Früh- und Endfestigkeit. Dies erlaubt eine weitgehende Automatisierung des Herstellungsverfahrens und erlaubt insbesondere in einem Vorgang
i) einen extrudierten Kunststoffschaumstrang an den Breitseiten zu bearbeiten,
ii) an den Breitseiten mit Klebstoff zu beschichten,
iii) mit den Breitseiten und zwischenliegendem Klebstoff aufeinander zulegen und
iv) zu stapeln und einem Lager zuzuführen.

Bei der Handhabung müssen die übereinander liegenden Platten eine gewisse Fixierung besitzen. Die Fixierung wird vorzugsweise durch die Frühfestigkeit des Klebstoffs bewirkt. Ohne die Frühfestigkeit besteht die Gefahr einer unerwünschten Verschiebung der Platten.

Die Platten werden vorzugsweise so übereinander gelegt, dass das entstehende Produkt eine mehrschichtige Kunststoffschaumplatte mit einem Stufenfalz am Rand oder mit einer Nut-Feder-Verbindung am Rand ist.

Ein Stufenfalz wird erhalten, wenn zwei Platten parallel zu den Breitseiten der Platten um ein Maß versetzt zueinander aufeinander gelegt werden, das der gewünschten Stufenbreite entspricht.

Eine Nut-Feder-Verbindung wird erhalten, wenn drei Platten übereinander gelegt werden, wobei die beiden äußeren Platten deckungsgleich angeordnet sind, während die mittlere Platte parallel zu ihren Breitseiten gegenüber den äußeren Platten um ein Maß verschoben ist, das der gewünschten Feder und der gewünschten korrespondierenden Nut entspricht. Je nach Auslegung des Klebstoffs kann die Frühfestigkeit so groß sein, dass auch noch eine Bearbeitung der Schmalseiten an den Platten möglich ist.

In einer bevorzugten Variante der vorliegenden Erfindung wird die Klebstoffzusammensetzung auf eine Offenzeit von wenigen Minuten eingestellt, z. B. von weniger als 30 min, vorzugsweise weniger als 15 min und noch weitere bevorzugt weniger als 10 min, insbesondere auf eine Zeit im Bereich von 3 min bis kleiner 10 min. Die Zeit ist einerseits ausreichend, um die Ausgangsplatten aufeinander zu legen und zu positionieren. Andererseits ist die Zeit ausreichend kurz, damit die Klebstoffzusammensetzung kurzfristig genug anzieht, um die so verbundenen Platten zu handhaben und gegebenenfalls zu bearbeiten.

Die erfindungsgemäß einsetzbare Klebstoffzusammensetzung ist vorzugsweise durch eine dauerhafte Beständigkeit gekennzeichnet. Die Aushärtung sollte zweckmäßigerweise nach etwa 24 Stunden abgeschlossen sein.

Die Verklebung wird vorzugsweise durch Bewitterungseinflüsse, Wasser, hohe Temperatur, Frost-Tau-Wechsel nicht beeinflusst.

Im Rahmen einer besonders bevorzugten Variante der vorliegenden Erfindung werden zunächst Styrolpolymerschaumstoffplatten, bevorzugt Polystyrolschaumstoffplatten mit einem Raumgewicht von 30 kg/m³ bis 45 kg/m³, hergestellt. Dabei wird vorzugsweise in einem ersten Schritt mittels einer Tandem-Extrusionsanlage ein Endlos-Schaumstoffstrang erzeugt. Die Tandem-Extrusionsanlage besteht zweckmäßigerweise aus einem Primärextruder und einem Sekundärextruder. In dem Primärextruder wird ein Kunststoffgranulat mit den üblichen verschiedenen Additiven und Verarbeitungshilfen aufgeschmolzen und zu einer homogenen Schmelze vermischt. Die entstehende Schmelze wird mit Treibmittel versetzt und das Gemisch auf dem weiteren Weg durch den Extruder weiter homogenisiert. Daran schließt sich eine Abkühlung der Schmelze auf Extrusionstemperatur im Sekundärextruder an. Im Sekundärextruder herrscht ein erheblicher Druck. Beim Austragen der Schmelze durch die Düse des Extruders findet eine Entspannung der Schmelze statt. Infolgedessen expandiert das Treibmittel und bildet in der Schmelze entsprechend seiner feinen Verteilung eine Vielzahl gleichmäßig verteilter Blasen/Zellen.

Im Rahmen einer weiteren besonders bevorzugten Variante der vorliegenden Erfindung wird anstelle einer Tandemanlage eine Extrusionsanlage mit einem einzigen Extruder eingesetzt. Es kann sich um Extruder verschiedener Bauart handelt, z. B. Einschneckenextruder oder Doppelschneckenextruder.

Die Schmelze wird hier in einem sogenannten Kalibrator geschäumt. Es handelt sich um Metallplatten, welche dem entstehenden Schaumstrang seine Dicke geben. Die Platten werden dann durch Ablängen des Schaumstrangs erhalten und können zweckmäßigerweise nach vorheriger Lagerung weiterverwendet werden, d. h. in erfindungsgemäßer Weise verbunden werden.

Als nächstes wird der Klebstoff durch Kaschieren oder Sprühen auf mindestens eine Oberfläche mindestens einer Platte aufgebracht.

Vorzugweise gelangen die Ausgangsplatten nach dem Kleberauftrag in eine weitere Station, in der sie vorzugsweise aufgerichtet und gegeneinander gedruckt werden. Zugleich findet eine Zentrierung der Ausgangsplatten aufeinander oder ein gewünschter Versatz der Ausgangsplatten gegeneinander statt.

Die verbundenen Platten werden dann einem Lager zugeführt.

Die nach dem erfindungsgemäßen Verfahren erhältlichen Verbundkörper umfassen vorzugsweise mindestens zwei Styrolpolymerschaumstoffplatten und eine dazwischen liegende, ggf. vernetzte Klebstoffzusammensetzung, wobei die Styrolpolymerschaumstoffplatten jeweils auf mindestens einer Oberfläche eine Schicht aufweisen, die
a. jeweils mindestens 90,0 % der Gesamtfläche der jeweiligen Oberfläche bedeckt,
b. zweckmäßigerweise 0,01 mm bis 1,0 mm, bevorzugt 0,05 mm bis 1,0 mm, insbesondere 0,05 mm bis 0,5 mm, dick ist und
c. mindestens ein Styrolpolymer umfasst,
wobei die Schichten jeweils Bereiche mit einer Rauheit Rt im Bereich von 0,05 mm bis 1,0 mm aufweisen.

Im Übrigen unterliegen die nach dem erfindungsgemäßen Verfahren erhältlichen Verbundkörper grundsätzlich keinen weiteren Beschränkungen. So können sie beispielsweise mehr als zwei Styrolpolymerplatten umfassen, zwischen denen zweckmäßigerweise jeweils eine Klebstoffzusammensetzung der vorstehend beschriebenen Art angeordnet ist.

Weiterhin kann die Dicke der Verbundkörper grundsätzlich frei gewählt werden. Allerdings sind die Vorteile der vorliegenden Erfindung insbesondere bei dicken Verbundkörpern zu beobachten, die vorzugsweise eine Dicke von mindestens 70 mm, gemessen senkrecht zur Flächennormalen der Klebstoffschicht und/oder der Platten, aufweisen.

Mögliche Anwendungsgebiete des erfindungsgemäßen Verbundkörpers umfassen seine Verwendung als Isolationsstoff, bevorzugt zur Isolierung von Gebäuden, insbesondere zur Wärmedämmung von Gebäuden.

Nachfolgend wird die Erfindung durch Beispiele und Vergleichsbeispiele weiter veranschaulicht, ohne dass hierdurch eine Beschränkung des Erfindungsgedankens erfolgen soll.

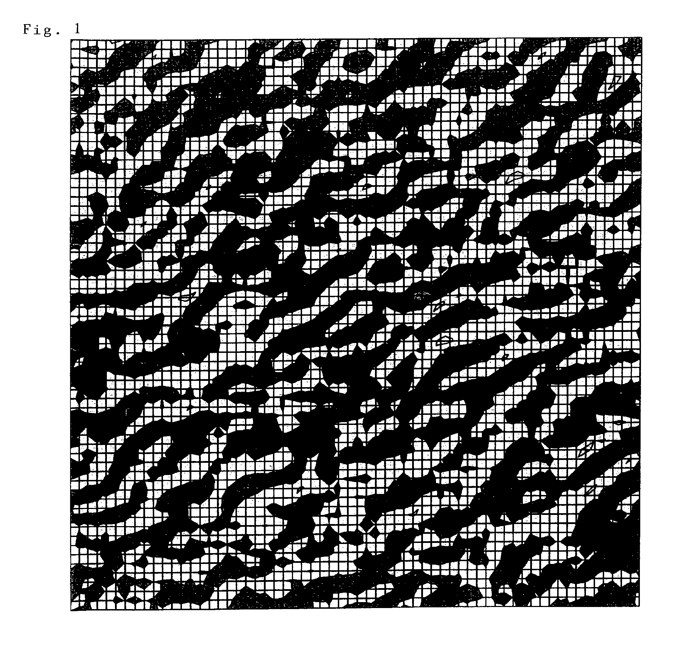

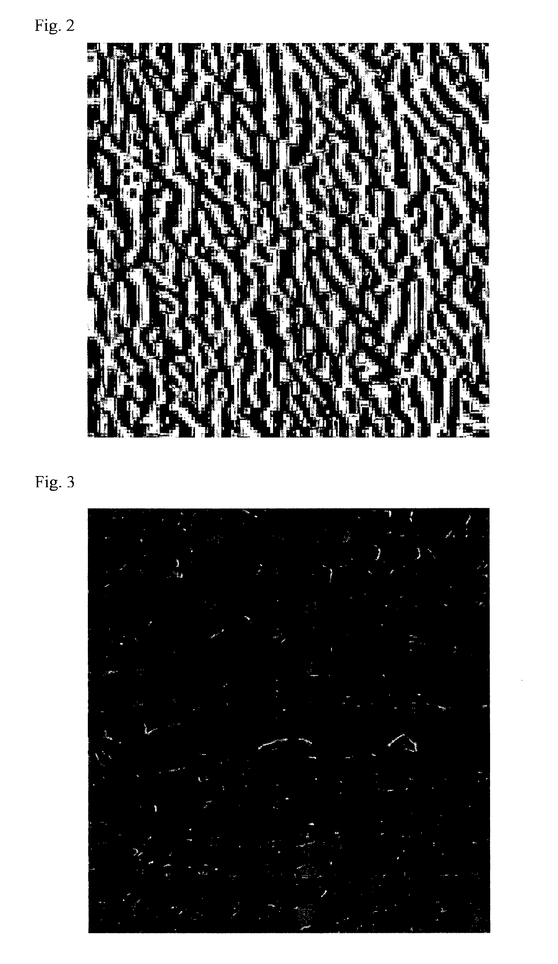

Zur Herstellung des erfindungsgemässen Verbundkörpers werden folgende Anlagenteile aufgebaut:
- Ölbeheizte Prägewalze aus Edelstahl mit zufällig angeordneter Oberflächenstrukturierung, wie in der Beschreibung genauer beschrieben. Die Struktur kann durch einen Autoregressionsalgorithmus (vgl. Klaus Voss (Autor), Herbert Süße (Autor) "Praktische Bildverarbeitung" Verlag: Hanser Fachbuchverlag (1991), ISBN-10: 3446162372, ISBN-13: 978-3446162372) erzeugt und durch Laserbearbeitung auf die Walzenoberfläche übertragen werden. Fig. 1 zeigt ein berechnetes Muster, Fig. 2 zeigt einen Ausschnitt einer realen Walzenoberfläche.
- Auftragsstation für Heissschmelzkleber, bestehend aus einer ölbeheizten Auftragswalze und einer Dosierwalze (beide oben) sowie einer Transportwalze vertikal unterhalb der Auftragswalze. Zwischen Auftrags- und Transportwalze wird das Spaltmass für die mit Klebstoff zu beschichtende Schaumstoffplatte eingestellt.
- Dreifache Rollenpresse, bestehend aus drei aufeinander folgenden Walzenpaaren, die jeweils senkrecht übereinander angeordnet, mit einzeln einstellbarem Spaltmass zur schrittweisen Erzeugung des notwendigen Anpressdrucks zur Erreichung einer ausreichenden Anfangsfestigkeit.

Zur Herstellung eines erfindungsgemässen Verbundkörpers werden zwei zuvor durch Extrusion hergestellte 80 mm dicke Styrolpolymerschaumplatten mit Extrusionshaut und einem Raumgewicht von rund 33 kg/m³ als Ausgangsteile verwendet. Damit werden folgende Schritte ausgeführt:
- Thermische Prägung der beim Verkleben einander zugewandten Oberflächen durch die vorbeschriebene Prägewalze bei einer Temperatur von 147 °C und einem Anpressdruck von rund 125 kPa.
- Auftrag von ca. 100 g/m² eines Heissschmelzklebers des Typs silangepfropftes Poly-α-olefin (P) auf eine geprägte Plattenoberfläche bei einer Klebstofftemperatur von ca. 168 °C und einem Anpressdruck von ca. 100 kPa.
- Auflage (im Versuch von Hand, in der Produktion automatisch) der zweiten Platte mit der Prägeseite nach unten (Klebstoffseite).
- Pressung der frisch gefügten Teile in der Rollenpresse in Schritten von ca. 60, 120 und 180 kPa.

Fig. 3 zeigt ein Mikroskopie-Foto eines Vertikalschnitts durch die Klebstofffuge mit gut erkennbaren Oberflächenstrukturen. Nach dem hier beschriebenen Verfahren, mit teilweise unterschiedlicher Oberflächenbehandlung und unterschiedlichen Klebstoffen, wurden beispielhaft weitere Muster hergestellt. Die folgende Tabelle 1 enthält eine vergleichende Darstellung der Eigenschaften verschiedener Muster.

**Tabelle 1**

| Klebstoff | Anfangshaftung¹⁾ | Bruchfestigkeit 23°C | Temperaturfestigkeit 60°C | Rauheit | Auftragsmenge [g/m²] | Bemerkung |
|---|---|---|---|---|---|---|
| Heissschmelzkleber Poly-α-olefin (P) silan-gepfropft | + | ++ | + | 0.3 mm | 100 | |
| | + | ++ | + | 0.3 mm | 75 | Klebstoffmenge ausreichend effektive Oberfläche klein faserartige Oberflächen |
| | + | - | - | 0.1 mm | 100 | |
| | - | - | - | gehobelt | 100 | |
| Heissschmelzkleber Poly-α-olefin (P) nicht-reaktiv | ++ | ++ | - | 0.3 mm | 75 | i.O. bis 50 °C |
| | ++ | ++ | - | 0.2 mm | 100 | i.O. bis 50 °C |
| 2-Komponenten PUR | - | ++ | ++ | 0.3 mm | 80 | Fixierung erforderlich |

| | | | | | | |
|---|---|---|---|---|---|---|
| ¹⁾Bewertung: ++ sehr gut + gut - weniger gut -- schlecht | | | | | | |

## Patentansprüche

1. Verfahren zum Verkleben von mindestens zwei Styrolpolymerschaumstoffplatten, **dadurch gekennzeichnet, dass** man
(i) zwei Styrolpolymerschaumstoffplatten bereitstellt, die jeweils auf mindestens einer Oberfläche eine Schicht aufweisen, die
a. jeweils mindestens 90,0 % der Gesamtfläche der jeweiligen Oberfläche bedeckt und
b. mindestens ein Styrolpolymer umfasst,
wobei die Schichten jeweils Bereiche mit einer Rauheit Rt im Bereich von 0,05 mm bis 1,0 mm aufweisen,
(ii) eine Klebstoffzusammensetzung auf einen Bereich der ersten Styrolpolymerschaumstoffplatte aufbringt, der eine Rauheit Rt im Bereich von 0,05 mm bis 1,0 mm aufweist,
(iii) die Klebstoffzusammensetzung auf der der ersten Platte abgewandten Seite mit einem Bereich der zweiten Styrolpolymerschaumstoffplatte in Kontakt bringt, der eine Rauheit Rt im Bereich von 0,05 mm bis 1,0 mm aufweist,
(iv) die Klebstoffzusammensetzung ggf. auskühlen und aushärten lässt,
(v) die Auftragsmenge der Klebstoffzusammensetzung, bezogen auf die Klebefläche, im Bereich 40 g/m² bis 250 g/m², bevorzugt 80 g/m² bis 150 g/m², wählt.

2. Verfahren nach Anspruch 1, **dadurch gekennzeichnet, dass** man das Verkleben der Styrolpolymerschaumstoffplatten durch Anlegen eines Anpressdrucks, insbesondere zwischen 0,1 bar und 1 bar, bevorzugt von mindestens 0,8 bar, unterstützt.

3. Verfahren nach Anspruch 1 oder 2, **dadurch gekennzeichnet, dass** man extrudierte Styrolpolymerschaumstoffplatten miteinander verklebt, deren Extrusionshaut an den zu verklebenden Stellen vor der Verklebung nicht entfernt wurde.

4. Verfahren nach Anspruch 1, 2 oder 3, **dadurch gekennzeichnet, dass** man extrudierte Styrolpolymerschaumstoffplatten miteinander verklebt, deren Oberflächen vorbehandelt wurden.

5. Verfahren nach 4, **dadurch gekennzeichnet, dass** die Oberflächenbehandlung durch thermische Prägung erfolgt, bevorzugt durch eine temperierte Prägewalze mit zufällig angeordneter Struktur aus länglichen und kornartigen Erhöhungen oder Vertiefungen, deren Breite bevorzugt im Bereich von 0,01 bis 1,0 mm, insbesondere zwischen 0,05 und 0,5 mm, und deren Länge bevorzugt im Bereich von 0,01 bis 10,0 mm, insbesondere zwischen 0,05 und 5,0 mm liegt, und einer Oberflächentemperatur zwischen 130°C und 200°C.

6. Verfahren nach mindestens einem der vorangehenden Ansprüche, **dadurch gekennzeichnet, dass** die Schicht 0,05 mm bis 1,0 mm dick ist.

7. Verfahren nach mindestens einem der vorangehenden Ansprüche, **dadurch gekennzeichnet, dass** die Styrolpolymerschaumstoffplatten jeweils auf der Seite, welche mit der Klebstoffzusammensetzung in Kontakt gebracht wird, einen Bereich mit einer Rauheit Rt im Bereich von 0,05 mm bis 1,0 mm aufweisen.

8. Verfahren nach mindestens einem der vorangehenden Ansprüche, **dadurch gekennzeichnet, dass** mindestens eine Styrolpolymerschaumstoffplatte auf der Seite, welche nicht mit der Klebstoffzusammensetzung in Kontakt gebracht wird, einen Bereich mit einer Rauheit Rt im Bereich von 0,05 mm bis 1,0 mm aufweist.

9. Verfahren nach mindestens einem der vorangehenden Ansprüche, **dadurch gekennzeichnet, dass** die Schichten jeweils Bereiche mit einer Rauheit Rt im Bereich von 0,1 mm bis 0,5 mm aufweisen.

10. Verfahren nach Anspruch 9, **dadurch gekennzeichnet, dass** die Schichten jeweils Bereiche mit einer Rauheit Rt im Bereich von größer 0,1 mm bis 0,3 mm aufweisen.

11. Verfahren nach mindestens einem der vorangehenden Ansprüche, **dadurch gekennzeichnet, dass** man eine Klebstoffzusammensetzung einsetzt, die eine ggf. vernetzte Heißschmelzklebstoffzusammensetzung umfasst.

12. Verfahren nach Anspruch 11, **dadurch gekennzeichnet, dass** die Heißschmelzklebstoffzusammensetzung mindestens ein thermoplastisches, bei 25°C festes, silangepfropftes Poly-α-olefin (P) umfasst, welches ggf. nachträglich vernetzt wurde.

13. Verfahren nach Anspruch 12, **dadurch gekennzeichnet, dass** das silangepfropfte Poly-α-olefin (P) eine Erweichungstemperatur zwischen 70°C und 150°C, insbesondere zwischen 80°C und 120°C, bevorzugt zwischen 80°C und 100°C, aufweist.

14. Verfahren nach mindestens einem der Ansprüche 11 bis 13, **dadurch gekennzeichnet, dass** die Heißschmelzklebstoffzusammensetzung mindestens einen bei 25°C festen, thermoplastischen Polyester (TPE) und bevorzugt mindestens ein Amid (A) der Formel (I) oder (II) umfasst, wobei R¹ für H, eine C₁-C₄-Alkylgruppe oder eine Benzylgruppe steht, R² für eine gesättigte oder ungesättigte C₈-C₂₂-Alkylgruppe steht.

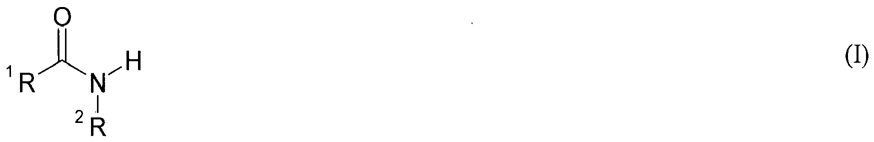

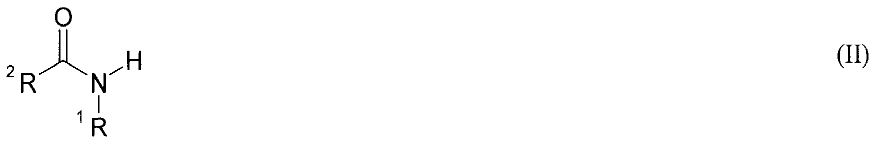

15. Verfahren nach mindestens einem der vorangehenden Ansprüche, **dadurch gekennzeichnet, dass** man extrudierte Polystyrolschaumstoffplatten als Styrolpolymerschaumstoffplatten einsetzt.

16. Verbundkörper, erhältlich nach einem Verfahren gemäß Anspruch mindestens einem der vorangehenden Ansprüche.

17. Verwendung eines Verbundkörpers gemäß Anspruch 16 zum Isolieren von Gebäuden.
